(19) Europäisches Patentamt / European Patent Office / Office européen des brevets

(11) **EP 4 506 431 A1**

(12) **EUROPÄISCHE PATENTANMELDUNG**

(43) Veröffentlichungstag:
**12.02.2025  Patentblatt 2025/07**

(21) Anmeldenummer: 23191080.3

(22) Anmeldetag: **11.08.2023**

(51) Internationale Patentklassifikation (IPC):
**C09J 5/00** (2006.01)    **C09J 7/22** (2018.01)
**C09J 7/28** (2018.01)    **C09J 7/35** (2018.01)
**C09J 9/02** (2006.01)

(52) Gemeinsame Patentklassifikation (CPC):
(C-Sets verfügbar)
**C09J 175/04; C08G 18/10; C08G 18/289;
C08G 18/7621; C08G 18/7635; C08G 18/798;
C09J 5/06; C09J 7/28; C09J 7/35;** C09J 2203/326;
C09J 2203/354; C09J 2301/124; C09J 2301/304;
C09J 2301/314; C09J 2301/408;          (Forts.)

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **TESA SE**
**22848 Norderstedt (DE)**

(72) Erfinder:
• **DOCKWEILER, Dennis**
**22848 Norderstedt (DE)**
• **WANG, Shuang**
**22848 Norderstedt (DE)**
• **EGGER, Michael**
**22848 Norderstedt (DE)**
• **KEITE-TELGENBÜSCHER, Klaus**
**22848 Norderstedt (DE)**

(74) Vertreter: **tesa SE**
**Hugo-Kirchberg-Straße 1**
**22848 Norderstedt (DE)**

(54) **KLEBEBAND, VERKLEBTER VERBUND UND VERFAHREN ZUM ELEKTRISCHEN LÖSEN DES VERKLEBTEN VERBUNDES**

(57)    Die Erfindung betrifft ein Klebeband, einen verklebten Verbund, ein Verfahren zum elektrischen Lösen des verklebten Verbundes und die Verwendung des Klebebands zur Verklebung von Bauteilen in elektronischen Geräten, Automobilen, medizinischen Geräten und zahnmedizinischen Geräten.

Das Klebeband umfasst wenigstens eine Klebemasseschicht D, wobei die Klebemasse der Klebemasseschicht D eine hitzeaktivierbare Klebemasse ist und wenigstens ein Elektrolyt enthält.

Fig. 1

**(Forts. nächste Seite)**

(52) Gemeinsame Patentklassifikation (CPC): (Forts.)
C09J 2301/502; C09J 2400/00; C09J 2400/163;
C09J 2463/00; C09J 2475/00

C-Sets
**C08G 18/10, C08G 18/7621;**
**C08G 18/10, C08G 18/7635;**
**C08G 18/10, C08G 18/798**

**Beschreibung**

Die Erfindung betrifft ein Klebeband, einen verklebten Verbund, ein Verfahren zum elektrischen Lösen des verklebten Verbundes und die Verwendung des Klebebands zur Verklebung von Bauteilen in elektronischen Geräten, Automobilen, medizinischen Geräten und zahnmedizinischen Geräten.

Zur Verklebung von Metallteilen auf Kunststoffen werden üblicher Weise doppelseitige Haftklebebänder eingesetzt. Die hierfür erforderlichen Klebkräfte genügen einer Fixierung und Befestigung der Metallbauteile auf den Kunststoffen. Als Metalle werden bevorzugt Stahl, Edelstahl sowie Aluminium eingesetzt. Als Kunststoffe werden z.B. PVC, ABS, PC oder Blends basierend auf diesen Kunststoffen eingesetzt. Für portable Konsumgüterelektronikartikel steigen jedoch stetig die Anforderungen. Diese Artikel werden immer kleiner, so dass damit auch die Verklebungsflächen geringer werden. Diese Voraussetzungen sind besonders problematisch für Metallverklebungen auf Kunststoffen. Dies kann in besonders effizienter Weise durch den Einsatz hitzeaktivierbarer Folien geschehen, die eine besonders hohe Verklebungsfestigkeit nach Aktivierung ausbilden können.

Die DE 102021200580 A1 offenbart beispielsweise einen Klebefilm, der mittels Wärmezufuhr gehärtet wird, wobei der Klebefilm auf einer Zubereitung in organischem Lösemittel basiert, die ein thermoplastisches Polymer, welches über funktionelle Gruppen mit Isocyanat reagieren kann, und eine entsprechende Isocyanat-haltige Vernetzer-Komponente enthält.

Neuerdings besteht ein erhöhtes Interesse an "Debonding-on-Demand"-Funktionalitäten, welche aufgrund von Umweltgesetzen bzw. des Bewusstseins der Endkunden für Nachhaltigkeit und einem steigenden Kostendruck bei der Herstellung zustande kommen. Die Anwendungsszenarien für Debonding-Prozesse werden in Nacharbeiten, Reparieren, Recycling und Verarbeitungshilfen klassifiziert.

Die Debonding-Technologien zielen darauf, ein kohäsives Spalten der Klebstoffschicht oder ein adhäsives Ablösen der Klebstoffschicht vom Substrat zu erzielen. Während ersteres eine Reinigung des Substrats vor einer Wiederverklebung erfordert, kommt letzteres ohne eine solche aus.

Adhäsiv lösende Technologien, die die geforderte hohe und dauerhaft zuverlässige Verklebungsfestigkeit garantieren, sind jedoch in der Regel schwieriger zu verwirklichen oder dauern in der Anwendung sehr lange, wie z.B. das Ablösen mittels eines unterwandernden Lösemittels.

So sind derzeit insbesondere in der Nacharbeit oder Reparatur von elektronischen Geräten, wie z.B. Smartphones und Tablet-Computern, vorwiegend kohäsiv spaltende Klebverbindungen im Einsatz, vielfach ausgeführt als Haftklebebänder, die über eine Temperaturerhöhung so weit in ihrer Kohäsion gemindert werden, dass eine manuelle, kohäsive Trennung der Verklebung erfolgen kann. Umfangreiche Nacharbeiten zur Vorbereitung der mit Klebstoffresten verunreinigten Substratoberfläche für eine Wiederverklebung sind die Folge.

Neben wärmevermittelten Trennverfahren werden elektrische Trennverfahren diskutiert. So offenbart beispielsweise die EP 3031875 B1 die Herabsetzung der Klebkraft einer Acrylat-Klebemasse durch das Anlegen einer Spannung.

Die EP 3199344 B1 und die DE 102005050632 A1 offenbart das elektrische Wiederablösen von als Schmelzklebstoffen aufgetragenen Massen.

Die EP 4067401 A1 offenbart ein flüssiges 2-Komponenten-Klebstoffsystem, welches nach erfolgter Verklebung elektrochemisch wieder abgelöst werden kann.

Die EP 4050040 A1 offenbart flüssige 1-Komponenten-Klebstoffe, die elektrochemisch wieder abgelöst werden können, indem für 30 Minuten eine Spannung angelegt wird.

Die US 2007269659 A1 offenbart einen 2-Komponenten-Klebstoff, der durch in Kontaktbringen der beiden Komponenten aushärtet, und die anschließende Verringerung der Zugfestigkeit des verklebten Verbundes durch das Anlegen einer Spannung von 50 V.

Hitzeaktivierte Klebeverbindungen, insbesondere solche, die durch hitzeaktivierbare Klebebänder hergestellt sind, weisen in der Regel jedoch sehr hohe Verklebungsfestigkeiten auf.

Diese Klebebandlösungen sind daher nicht oder nicht ohne Beschädigung der damit verklebten Substrate und unter sehr hohem Kraftaufwand wieder ablösbar.

Der vorliegenden Erfindung liegt daher die Aufgabe zugrunde, ein Klebeband, umfassend wenigstens eine Klebemasseschicht D, wobei die Klebemasse der Klebemasseschicht D eine hitzeaktivierbare Klebemasse ist, bereitzustellen, wobei sich das Klebeband mit geringem Kraftaufwand von wenigstens einem Substrat wieder ablösen lassen soll. Gleichzeitig soll die Verklebungsfestigkeit des Klebebandes an die zu verklebenden Substrate vor dem Lösen nicht negativ beeinträchtigt sein.

Die Aufgabe wird erfindungsgemäß durch das Klebeband gemäß Anspruch 1 gelöst.

Das erfindungsgemäße Klebeband umfasst wenigstens eine Klebemasseschicht D, wobei die Klebemasse der Klebemasseschicht D eine hitzeaktivierbare Klebemasse ist und wenigstens ein Elektrolyt enthält.

Mittels des enthaltenen Elektrolyten ist die Klebemasseschicht D durch Anlegen einer Spannung elektrisch ablösbar.

Überraschenderweise hat sich herausgestellt, dass sich die hitzeaktivierbare Klebemasseschicht enthaltend wenigstens ein Elektrolyt und damit das Klebeband umfassend die hitzeaktivierbare Klebemasseschicht ohne großen Kraftaufwand von verklebten Substraten elektrisch durch Anlegen einer Spannung auf einfache und schnelle Weise wieder ablösen lässt, und gleichzeitig die hohe Verklebungsfestigkeit des Klebebandes an die zu verklebenden Substrate vor dem Lösen nicht negativ beeinträchtigt ist.

Klebebänder und Verfahren zum elektrischen Wiederablösen bzw. zur elektrischen Reduzierung der Klebkraft sind im Stand der Technik prinzipiell bekannt. So offenbart wie oben ausgeführt die EP 3031875 B1 ein solches elektrisches Verfahren. Die elektrisch ablösbare Klebemasse ist dabei eine solche auf Acrylat-Basis.

Auch Schmelzklebstoffe und flüssige 1- und 2-Komponenten Systeme können elektrisch ablösbar ausgerüstet sein, wie oben beschrieben.

Es war vorliegend allerdings nicht abzusehen, dass sich auch ein filmförmig vorliegendes hitzeaktivierbares Klebemasseband, bei dem die Klebkräfte an verschiedene Substrate vergleichsweise hoch sind, nach dem Verkleben elektrisch ablösen lässt, und zwar ohne, dass die Verklebungsfestigkeit des Klebebandes an die zu verklebenden Substrate vor dem Lösen negativ beeinträchtigt ist. Gleichzeitig ist das Lösen sauber und einfach.

Dabei war insbesondere nicht abzusehen, dass eine im Klebefilm bzw. Klebeband vergleichsweise rigide Matrix, wie beispielsweise aus thermoplastischem Elastomer, elektrisch ablösbar ausgestaltet werden kann und der Elektrolyt hierbei mit der Matrix überhaupt kompatibel ist und ferner noch schnell genug durch die Matrix migrieren kann ohne die Verklebungsfestigkeit negativ zu beeinträchtigen.

Das erfindungsgemäße Klebeband ist bevorzugt ein doppelseitiges Klebeband. Der Einfachheit halber wird das erfindungsgemäße Klebeband im Rahmen der vorliegenden Erfindung auch in den doppelseitigen Ausführungsformen als "Klebeband" bezeichnet.

Die vorliegende Erfindung betrifft ein Klebeband, welches in beliebigen Konfektionsformen vorliegen kann, wobei Klebebandrollen bevorzugt sind. Das Klebeband, insbesondere in Bahnform, kann entweder in Form einer Rolle, also in Form einer archimedischen Spirale auf sich selbst aufgerollt, hergestellt werden oder als Klebestreifen, wie er zum Beispiel in Form von Zuschnitten oder Stanzlingen erhalten wird.

Das erfindungsgemäße Klebeband liegt insbesondere in Bahnform vor. Unter einer Bahn wird ein Objekt verstanden, dessen Länge (Erstreckung in x-Richtung) um ein Vielfaches größer ist als seine Breite (Erstreckung in y-Richtung) und die Breite entlang der gesamten Länge in etwa vorzugsweise genau gleichbleibend ausgebildet ist.

Der allgemeine Ausdruck "Klebeband", synonym auch "Klebestreifen" genannt, umfasst im Sinne dieser Erfindung alle flächigen Gebilde, wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband weist neben der Längsausdehnung (x-Richtung) und Breitenausdehnung (y-Richtung) auch eine senkrecht zu beiden Ausdehnungen verlaufende Dicke (z-Richtung) auf, wobei die Breitenausdehnung und Längsausdehnung um ein Vielfaches größer sind als die Dicke. Die Dicke ist über die gesamte durch Länge und Breite bestimmte Flächenausdehnung der Klebebänder möglichst gleich, vorzugsweise innerhalb von Toleranzen exakt gleich.

Die Ausführungen gelten analog für die Trägerschicht(en), die als Bestandteil des Klebebandes gemäß einiger bevorzugter Ausführungsformen eine Schicht in x- und y-Richtung ausbildet bzw. ausbilden.

Es versteht sich, dass die einzelnen Schichten entlang der z-Richtung aufeinander angeordnet sind.

Sämtliche Ausführungen der Beschreibung gelten für das erfindungsgemäße Klebeband, das erfindungsgemäße Verfahren zur Herstellung des Klebebandes, den erfindungsgemäßen verklebten Verbund, das erfindungsgemäße Verfahren zum Herstellen des verklebten Verbundes sowie das Verfahren zum elektrischen Lösen des Verbundes und die Verwendung des erfindungsgemäßen Klebebandes.

Von der Erfindung sind zudem sämtliche Merkmale, die Gegenstände von jeglichen abhängigen Patentansprüchen sind, umfasst. Ferner sind von der Erfindung Kombinationen einzelner Merkmale miteinander und hierbei auch unterschiedlicher Bevorzugungsstufen umfasst. Somit ist von der Erfindung beispielsweise die Kombination eines ersten als "bevorzugt" gekennzeichneten Merkmals mit einem zweiten als "besonders bevorzugt" gekennzeichneten Merkmals umfasst. Hierbei sind auch im Rahmen von "Ausführungsformen" bezeichnete Gegenstände ebenfalls unterschiedlicher Bevorzugungsstufen mit umfasst.

Im Folgenden wird die Klebemasse der Klebemasseschicht D näher ausgeführt.

Die Klebemasseschicht D enthält wenigstens ein Elektrolyt.

Unter einem "Elektrolyt" wird vorliegend eine chemische Verbindung verstanden, "die im festen, flüssigen oder gelösten Zustand in Ionen dissoziiert ist und die sich unter dem Einfluss eines elektrischen Feldes gerichtet bewegt", wie unter dem Wikipedia-Eintrag "Elektrolyt" vom 04.01.2023 aufgeführt.

Bevorzugt ist der Elektrolyt der Klebemasseschicht D ausgewählt aus der Gruppe bestehend aus ionischen Flüssigkeiten und Metallsalzen, wobei ionische Flüssigkeiten besonders bevorzugt sind.

Insbesondere durch eine oder mehrere ionische Flüssigkeiten als Elektrolyt lässt sich das Klebeband auf einfache Weise wieder ablösen, ohne dass die Klebeigenschaften des Klebebandes negativ beeinträchtigt sind. Ionische Flüssigkeiten haben dabei den Vorteil, dass sie sich gut und homogen in der Polymermatrix von Klebemassen verteilen lassen und das Wiederablösen schneller funktioniert als mit anderen Elektrolyten.

Ferner sind die Bestandteile von ionischen Flüssigkeiten, insbesondere bei Raumtemperatur, nicht flüchtig. Ionische Flüssigkeiten sind zudem vergleichsweise hitzestabil und nicht brennbar sowie chemisch vergleichsweise stabil.

Ionische Flüssigkeiten sind im Rahmen der vorliegenden Erfindung Salze, die bei Raumtemperatur, also 23 °C, flüssig sind. Ionische Flüssigkeiten enthalten dementsprechend Anionen und Kationen.

Ionische Flüssigkeiten sind daher als Elektrolyt im Rahmen des erfindungsgemäßen Trennverfahrens bzw. Verfahrens zum elektrischen Lösen besonders gut geeignet.

Wenn eine Spannung angelegt wird, wandern die Anionen zur anodischen Seite und die Kationen zur kathodischen Seite. Ohne sich hierauf einschränken zu wollen, kann mechanistisch davon ausgegangen werden, dass es hierdurch zu einer Absenkung der Klebkraft der die ionische Flüssigkeit enthaltenden Klebemasseschicht an wenigstens ein Substrat kommt, wodurch eine adhäsive Spaltung zwischen der Klebemasse und dem wenigstens einen Substrat erzielt wird.

Im Rahmen der vorliegenden Erfindung sind prinzipiell alle ionischen Flüssigkeiten geeignet.

Die im Rahmen der vorliegenden Erfindung verwendeten ionischen Flüssigkeiten enthalten wenigstens ein Anion und wenigstens ein Kation. Hierbei ist es auch denkbar, dass die ionische Flüssigkeit zwei oder mehr Typen an Anionen und/oder zwei oder mehr Typen an Kationen umfasst. Ferner ist es denkbar, dass der Klebemasseschicht D zwei oder mehrere verschiedene ionische Flüssigkeiten zugegeben werden bzw. die Klebemasseschicht D dann zwei oder mehrere verschiedene ionische Flüssigkeiten enthält.

Bevorzugt ist das Anion der ionischen Flüssigkeit ausgewählt aus der Gruppe bestehend aus $Br^-$, $AlCl_4^-$, $Al_2Cl_7^-$, $NO_3^-$, $BF_4^-$, $PF_6^-$, $CH_3COO^-$, $CF_3COO^-$, $CF_3CO_3^-$, $CF_3SO_3^-$, $(CF_3SO_2)_2N^-$, $(CF_3SO_2)_3C^-$, $AsF_6^-$, $SbF_6^-$, $CF_3(CF_2)_3SO_3^-$ $(CF_3CF_2SO_2)_2N^-$, $CF_3CF_2CF_2COO^-$, $(FSO_2)_2N^-$.

Hiermit wird überraschenderweise, insbesondere in reaktiven hitzeaktivierbaren Klebemassen, eine extrem hohe Reduzierung der Verklebungsfestigkeit durch Anlegen einer Spannung und damit eine besonders gute elektrische Ablösbarkeit des erfindungsgemäßen Klebebandes erzielt. Insbesondere gelingt das (Wieder-)Ablösen mit diesem Anion besonders schnell und es verbleiben keine Rückstände.

Besonders bevorzugt ist das Anion ausgewählt aus der Gruppe bestehend aus $(CF_3SO_2)_2N^-$ und $(FSO_2)_2N^-$.

Diese Anionen sind besonders gut geeignet, da hiermit die beste elektrische Ablösbarkeit erzielt wird. Insbesondere gelingt das (Wieder-)Ablösen mit diesen Anionen besonders schnell und es verbleiben keine Rückstände.

Bevorzugt ist das Kation der ionischen Flüssigkeit ausgewählt aus der Gruppe bestehend aus Kationen auf Imidazolium-Basis, Kationen auf Pyridinium-Basis, Kationen auf Pyrrolidin-Basis und Kationen auf Ammonium-Basis.

Hiermit wird überraschenderweise, insbesondere in reaktiven hitzeaktivierbaren Klebemassen, eine extrem hohe Reduzierung der Verklebungsfestigkeit durch Anlegen einer Spannung und damit eine besonders gute elektrische Ablösbarkeit des erfindungsgemäßen Klebebandes erzielt. Insbesondere gelingt das (Wieder-)Ablösen mit diesem Anion besonders schnell und es verbleiben keine Rückstände.

Besonders bevorzugt ist das Kation ausgewählt aus der Gruppe bestehend aus Kationen auf Imidazolium-Basis.

Diese Kationen sind besonders gut geeignet, da hiermit die beste elektrische Ablösbarkeit erzielt wird. Insbesondere gelingt das (Wieder-)Ablösen mit diesen Kationen besonders schnell und es verbleiben keine Rückstände.

Ganz besonders bevorzugt ist das Kation ausgewählt aus der Gruppe bestehend aus 1-Ethyl-3-methylimidazolium und 1-Butyl-3-methylimidazolium. Wiederum bevorzugt ist das Kation 1-Ethyl-3-methylimidazolium.

Besonders bevorzugt ist der Elektrolyt der Klebemasseschicht D ausgewählt aus der Gruppe bestehend aus den ionischen Flüssigkeiten 1-Ethyl-3-methylimidazolium-bis(trifluormethylsulfonyl)imid (EMIM-TFSI) und 1-Ethyl-3-methylimidazolium bis(fluorsulfonyl)imid (EMIM-FSI).

Hiermit wird überraschenderweise, insbesondere in reaktiven hitzeaktivierbaren Klebemassen, eine extrem hohe Reduzierung der Verklebungsfestigkeit durch Anlegen einer Spannung und damit eine besonders gute elektrische Ablösbarkeit des erfindungsgemäßen Klebebandes erzielt. Insbesondere gelingt das (Wieder-)Ablösen mit diesem Anion besonders schnell und es verbleiben keine Rückstände.

Bevorzugt ist es, dass die erste Klebemasseschicht D 1 bis 10 Gew.-%, besonders bevorzugt 2 bis 8 Gew.-%, an Elektrolyten, bevorzugt ionischen Flüssigkeiten, bezogen auf die Gesamtmenge der Klebemasse enthält.

Mit einer derartigen bevorzugten bzw. besonders bevorzugten Menge an Elektrolyten, insbesondere ionischen Flüssigkeiten, wird ein vergleichsweise schnelles elektrisches Ablösen ermöglicht, wobei gleichzeitig die Adhäsion der Klebemasseschicht an die benachbarten Schichten, insbesondere wenigstens ein Substrat, vor dem Ablösen nicht negativ beeinträchtigt ist.

Die Masse der Klebemasseschicht D ist eine hitzeaktivierbare Klebemasse.

Hitzeaktivierbare Klebmassen können grundsätzlich in zwei Kategorien unterschieden werden, nämlich in rein physikalisch hitzeaktivierbare Klebemassen und in reaktive hitzeaktivierbare Klebemassen.

Physikalisch hitzeaktivierbare Klebemassen

Diese Klebemassen, auch als "Schmelzklebemassen" bezeichnet, sind bei Raumtemperatur nicht oder schwach selbstklebend. Die Klebemasse wird erst mit der Hitze aktiviert und dabei selbstklebrig. Dafür ist ein eine entsprechend hohe Glasübergangstemperatur der Klebemasse verantwortlich, so dass die Aktivierungstemperatur zur Erzielung einer hinreichenden Klebrigkeit - in der Regel einige zig bis hundert Grad Celsius - oberhalb der Raumtemperatur liegt. Es tritt bereits vor dem Abbinden der Masse aufgrund der selbstklebenden Eigenschaften eine Klebewirkung ein. Nach dem Zusammenfügen der Klebepartner bindet die physikalisch hitzeaktivierbare Klebemasse beim Abkühlen unter Verfestigung physikalisch ab, so dass die Klebewirkung im abgekühlten Zustand erhalten bleibt und dort die eigentlichen Klebkräfte ausgebildet hat.

Je mehr Wärme, Druck und/oder Zeit bei der Verklebung angewandt wird, desto fester wird in der Regel die Verbindung der beiden zu verklebenden Materialien. Hiermit können regelmäßig maximale Verbundfestigkeiten unter technisch leichten Verarbeitungs-Bedingungen verwirklicht werden.

Durch das physikalische Aufschmelzen wird eine hohe Verklebungsfestigkeit und damit Klebwirkung erzielt. Die Massen sind damit rein physikalisch hitzeaktivierbare Klebemassen.

Reaktive hitzeaktivierbare Klebemassen

Reaktive hitzeaktivierbare Klebemassen (auch als "Reaktivklebemassen" bezeichnet) sind Polymersysteme, die funktionelle Gruppen derart aufweisen, dass bei Wärmezufuhr eine chemische Reaktion stattfindet, wobei die Klebemasse chemisch abbindet, und eine höhere innere Festigkeit hervorruft.

Gleichfalls kann es vorteilhaft sein, die Reaktivklebemassen derart auszugestalten, dass sie bei erhöhter Temperatur weicher und/oder fließfähiger werden, um sich dem Klebverbund optimal anzupassen; dies wird insbesondere und bevorzugt durch eine thermoplastische Komponente erreicht.

Durch die genannte chemische Reaktion und auch das physikalische Aufschmelzen wird eine hohe Verklebungsfestigkeit und damit Klebwirkung erzielt.

Bevorzugt ist damit ein erfindungsgemäßes Klebeband, wobei die hitzeaktivierbare Klebemasse der Klebemasseschicht D eine reaktive hitzeaktivierbare Klebemasse oder eine physikalisch hitzeaktivierbare Klebemasse ist.

Wie sich aus dem Begriff "hitzeaktivierbar" ableiten lässt, erfolgt die Aktivierung, die zum Verklebungseffekt führt, durch Wärmezufuhr. Dies bedeutet, dass diese Klebemassen bei Raumtemperatur, insbesondere bei 23 °C, nicht aktiviert werden, das heißt der Effekt, der zur dauerhaften Verklebung führt, nicht ausgelöst wird.

Bevorzugt ist ein erfindungsgemäßes Klebeband, bei dem die hitzeaktivierbare Klebemasse erst bei Temperaturen von 50 °C oder mehr, und dabei bevorzugt bei Temperaturen von 50 °C bis 200 °C, aktiviert wird. Unter "hitzeaktivierbar" wird damit bevorzugt verstanden, dass eine Aktivierung bei einer Temperatur von 50 °C oder mehr, und dabei bevorzugt bei Temperaturen von 50 °C bis 200 °C, erfolgt.

Gemäß vorteilhafter Ausführungsformen der Erfindung wird die hitzeaktivierbare Klebemasse erst bei Temperaturen von 50 °C oder mehr, bevorzugt 60 bis 130 °C, besonders bevorzugt 70 bis 120 °C, ganz besonders bevorzugt 75 bis 110 °C, aktiviert.

Gemäß weiterer vorteilhafter Ausführungsformen der Erfindung wird die hitzeaktivierbare Klebemasse erst bei Temperaturen von 130 °C, bevorzugt 150 °C, oder mehr aktiviert.

Die Dauer der Aktivierung beträgt bevorzugt von 10 Sekunden bis 10 Minuten, besonders bevorzugt 10 Sekunden bis 8 Minuten.

Gemäß bevorzugter Ausführungsformen der Erfindung beträgt die Dauer 40 Sekunden bis 8 Minuten.

Gemäß bevorzugter Ausführungsformen der Erfindung beträgt die Dauer 30 Sekunden bis 6 Minuten, besonders bevorzugt 60 Sekunden bis 3 Minuten.

Mit diesen vergleichsweise kurzen Aktivierungszeiten wird eine schnelle und sehr stabile Verklebung erzielt.

Dabei wird bei einer hohen Aktivierungstemperatur in den genannten Temperaturbereichen bevorzugt eine entsprechend kurze Aktivierungsdauer gewählt, während bei niedrigen Temperaturen eine entsprechend längere Aktivierungsdauer gewählt wird. Dies hängt insbesondere auch von der zu erzielenden Verklebungsfestigkeit ab.

Die Aktivierung erfolgt zudem bevorzugt unter Anwendung eines Druckes, auch Verpressdruck genannt. Der Verpressdruck beträgt bevorzugt von 1 bis 15 bar, besonders bevorzugt 2 bis 12 bar.

Gemäß bevorzugter Ausführungsformen der Erfindung beträgt der Verpressdruck 2 bis 5 bar. Gemäß weiterer bevorzugter Ausführungsformen der Erfindung beträgt der Verpressdruck 4 bis 6 bar, insbesondere und beispielsweise 5 bar.

Gemäß weiterer bevorzugter Ausführungsformen der Erfindung beträgt der Verpressdruck 5 bis 10 bar, insbesondere und beispielsweise 6 bar oder 10 bar.

Vor der Aktivierung erfolgt bevorzugt eine sogenannte Vor-Laminierung, um eine optimale Benetzung des Substrates zu erzielen. Dies erfolgt insbesondere und beispielsweise durch das Vorwärmen der zu verklebenden Substrate.

Bevorzugt werden dabei im Falle physikalisch hitzeaktivierbarer Klebemassen die zu verklebenden Substrate auf eine Temperatur von 60 bis zu 90 °C angewärmt. Das Aufbringen der Klebemasseschicht auf das jeweilige Substrat erfolgt bevorzugt mit einem Druck von 1 bis 5 bar für eine Dauer von mehr als 5 Sekunden.

Hierdurch wird ein gleichmäßiges Auffließen der Klebemasse auf das Substrat vor der Aktivierung sichergestellt.

Bevorzugt werden im Falle reaktiver hitzeaktivierbarer Klebemassen die zu verklebenden Substrate auf eine Temperatur von 50 bis zu 70 °C angewärmt. Das Aufbringen der Klebemasseschicht auf das jeweilige Substrat erfolgt bevorzugt mit einem Druck von 1 bis 3 bar für eine Dauer von 5 bis 20 Sekunden.

Hierdurch wird ein gleichmäßiges Auffließen der Klebemasse auf das Substrat vor der Aktivierung sichergestellt.

Bevorzugt ist ein erfindungsgemäßes Klebeband, wobei die hitzeaktivierbare Klebemasse der Klebemasseschicht D eine Polymerkomponente umfasst, die gebildet ist aus mindestens einem thermoplastischen Elastomer. Bei dem thermoplastischen Elastomer kann es sich prinzipiell um alle thermoplastischen Polymere handeln, die für die Verwendung in hitzeaktivierbaren Klebemassen geeignet sind, wie insbesondere Polyurethane, Polyester, Polyamide.

Besonders bevorzugt ist das thermoplastische Elastomer thermoplastisches Polyurethan (TPU).

Das Polyurethan ist gemäß bevorzugter Ausführungsformen der Erfindung semikristallines Polyurethan, wobei die Klebemasse hierbei bevorzugt eine physikalisch hitzeaktivierbare oder eine reaktive hitzeaktivierbare Klebemasse ist.

Geeignete Polyurethane sind beispielsweise in Form kommerziell erhältlicher Produkte aus der Dispercoll® U-Familie oder der DesmomeltO-Familie der Covestro AG erhältlich, wie Dispercoll® U53 oder Desmomelt® 530.

Besonders bevorzugt ist die hitzeaktivierbare Klebemasse der Klebemasseschicht D eine reaktive hitzeaktivierbare Klebemasse.

Reaktive hitzeaktivierbare Klebemassen können dabei auf unterschiedlichen Polymeren und Vernetzungschemikalien und -mechanismen basieren.

Gemäß vorteilhafter Ausführungsformen der Erfindung ist die Polymerkomponente hierbei aus mindestens einem Polymer, das funktionelle Gruppen enthält, die mit Isocyanat reagieren können, gebildet. Die reaktive hitzeaktivierbare Klebemasse der Klebemasseschicht D umfasst hierbei weiterhin eine Vernetzer-Komponente, gebildet aus mindestens einer Isocyanat-haltigen Verbindung.

Das Polymer ist hierbei insbesondere ein thermoplastisches Elastomer, bevorzugt thermoplastisches Polyurethan, und wiederum bevorzugt semikristallines thermoplastisches Polyurethan.

Die funktionellen Gruppen, die mit Isocyanat reagieren können, sind beispielsweise und insbesondere Hydroxy-Gruppen, Amino-Gruppen oder Urethan-Gruppen.

Gemäß besonders bevorzugter Ausführungsformen der Erfindung handelt es sich bei den funktionellen Gruppen um Hydroxy-Gruppen.

Eine derartige reaktive hitzeaktivierbare Klebemasse lässt sich nach der Verklebung überraschenderweise besonders gut wieder elektrisch ablösen, wobei die Verklebungsfestigkeit durch Anlegen einer Spannung extrem reduziert wird.

Zudem erfolgt das Trennen auf eine saubere Weise; das heißt, dass an dem Substrat entweder keine Rückstände der Klebemasse vorhanden sind oder sich diese auf einfache Weise, zum Beispiel manuell, entfernen lassen.

Ferner wurde überraschenderweise gefunden, dass es je nach Art und Fläche der Rückstände der Klebemasse auch möglich ist, diese ohne Entfernen wiederzuverwenden und das Substrat somit über die Rückstände neu zu verkleben, was wiederum ökologische Vorteile mit sich bringt.

Gemäß bevorzugter Ausführungsformen der Erfindung werden Toluylen-diisocyanat-Verbindungen (TDI-Verbindungen) als Isocyanat-haltige Komponente eingesetzt, wie TDI-Dimere (etwa erhältlich als Dispercoll BL XP 2514® (wässrige Dispersion eines reaktiven Isocyanats auf Basis TDI-Dimer; vorliegend vorzugsweise einsetzbar nach Entfernung des Wassers) oder als Dancure® 999 (1,3-Bis(3-isocyanato-4-methylphenyl)-1,3-diazetidin-2,4-dion; Feststoff)), und/oder Isophoron-Diisocyanate (IPDI).

Bevorzugt enthält die hitzeaktivierbare Klebemasse 1 Gew.-% bis 25 Gew.-%, besonders bevorzugt 2 Gew.-% bis 15 Gew.-%, ganz besonders vorteilhaft 4 Gew.-% bis 10 Gew.-%, an aus Isocyanat-haltigen Verbindungen, bezogen auf die Gesamtmenge der Klebemasse.

Die reaktive hitzeaktivierbare Klebemasse kann dabei aus einer wässrigen Zusammensetzung oder einer Zusammensetzung auf Basis organischer Lösungsmittel erhalten werden.

Gemäß bevorzugter Ausführungsformen der Erfindung ist die reaktive hitzeaktivierbare Klebemasse eine wasserbasierte Klebemasse.

Gemäß weiterer bevorzugter Ausführungsformen der Erfindung ist die reaktive hitzeaktivierbare Klebemasse eine lösungsmittelbasierte Klebemasse.

Gemäß vorteilhafter Ausführungsformen der Erfindung umfasst die reaktive hitzeaktivierbare Klebemasse der Klebemasseschicht D bevorzugt weiterhin mindestens eine weitere Komponente aus der Gruppe der Epoxide und/oder Epoxy-Verbindungen.

Bevorzugt sind ein-, di-, tri- oder polyfunktionelle Epoxide und/oder Epoxy-Verbinden. Dazu zählen zum Beispiel bei 23 °C flüssige / viskose Verbindungen wie N,N,N',N'-Tetrakis(2,3-epoxypropyl)-m-xylol-a,a'-diamin und/oder 7-oxabicyclo-[4.1.0]hept-3-ylmethyl 7-oxabicyclo[4.1.0]heptane-3-carboxylate und/oder Verbindungen mit einem Schmelz- / Erweichungspunkt über 23 °C (sog. Epoxy- / Epoxidharze) wie Epiclon® N-673.

Geeignet sind beispielsweise und insbesondere Bisphenol F-Epoxy-Harze, welche zum Beispiel unter der Serie mit dem Handelsnamen Epiclon® erhältlich sind.

Gemäß weiterer vorteilhafter Ausführungsformen der Erfindung ist die hitzeaktivierbare Klebemasse der Klebemasseschicht D eine reaktive hitzeaktivierbare Klebemasse und umfasst weiterhin mindestens ein Peroxid. Auch hier ist bevorzugt als Polymerkomponente thermoplastisches Polyurethan enthalten.

Das Peroxid weist bevorzugt die allgemeine Strukturformel R-O-O-R' auf, wobei R und R' jeweils Organylgruppen oder gemeinsam eine zyklische Organylgruppe repräsentieren.

Eine Organylgruppe ist gemäß dem allgemeinen Verständnis des Fachmanns ein organischer chemischer Rest mit wenigstens einer freien Valenz an einem Kohlenstoffatom.

Besonders bevorzugt ist das Peroxid Dicumylperoxid. Hiermit sind die Klebebänder besonders lagerstabil und feuchtwärmebeständig.

Es können auch zwei oder mehrere Peroxide eingesetzt werden. In bevorzugter Vorgehensweise wird dann Dicumylperoxid als eines der zwei oder mehreren Peroxide gewählt.

Die Klebemasse der Klebemasseschicht D kann ferner weitere übliche Additive, wie Haftvermittler, wie insbesondere Silanhaftvermittler, Kompatibilisatoren, Emulgatoren, Verdicker, Füllstoffe, Pigmente, Amine und Alterungsschutzmittel enthalten.

Gemäß vorteilhafter Ausführungsformen der Erfindung enthält die Klebemasseschicht D wenigstens einen Silanhaftvermittler, bevorzugt insbesondere in Kombination mit mindestens einem Peroxid als Vernetzungschemikalie.

Bevorzugt werden als Silanhaftvermittler Alkoxysilane, insbesondere Trialkoxysilane, Dialkoxysilane und/oder Monoalkoxysilane, besonders bevorzugt Trialkoxysilane, eingesetzt. Beispiele für geeignete Trialkoxysilane sind Trimethoxysilane und Triethoxysilane.

Bevorzugt und beispielsweise wird als Silanhaftvermittler das Triethoxysilan 3-Methacryloxypropyltriethoxysilan eingesetzt.

Die Menge des wenigstens einen Silanhaftvermittlers beträgt bevorzugt 0,5 bis 20 Gew.-%, besonders bevorzugt 1 bis 10 Gew.-%, ganz besonders bevorzugt 1,5 bis 5 Gew.-%, insbesondere 2,5 bis 3,5 Gew.-%, bezogen auf die Gesamtmenge der Klebemasse.

Verdicker sind insbesondere als Additive in wässrigen bzw. wasserbasierten Systemen enthalten. Vor dem Verdampfen des Wassers, also dem Trocknen des Klebebandes, dienen die Verdicker als rheologische Hilfsmittel.

Als Kompatibilisatoren werden bevorzugt niedermolekulare Polyether, wie Polyethylenglykol (PEG) und/oder Polypropylenglykol (PPG), Polyamine, Polyvinylpyrrolidone oder aliphatische Polyester eingesetzt, die mit der Klebemasse homogen mischbar sind.

Ein weiterer Gegenstand der vorliegenden Erfindung ist ein verklebter Verbund umfassend wenigstens folgende Schichten:

- Ein erstes Substrat A; und

- Ein zweites Substrat B; und

- Ein erfindungsgemäßes Klebeband, welches zwischen dem Substrat A und dem Substrat B angeordnet ist und die Substrate A und B miteinander verklebt.

Ein weiterer Gegenstand der vorliegenden Erfindung ist ein Verfahren zum elektrischen Lösen des erfindungsgemäßen Verbundes, umfassend wenigstens folgende Verfahrensschritte:

i.) Anlegen einer Spannung an zwei verschiedenen Stellen des Verbundes, wobei die Spannung bevorzugt von 2 bis 50 V beträgt.

Das Anlegen der Spannung erfolgt gemäß Schritt i.) des erfindungsgemäßen Verfahrens zum elektrischen Lösen des Verbundes.

Bei der Spannung handelt es sich insbesondere um eine Gleichspannung.

Gemäß bevorzugter Ausführungsformen der Erfindung beträgt die Spannung von 3 bis 12 V. Eine derartige Spannung kann insbesondere dadurch angelegt werden, dass eine in der unmittelbaren Nachbarschaft der Verklebung befindliche Batterie verwendet wird, wie insbesondere und beispielsweise in einem Mobiltelefon, Tablet etc.

Gemäß weiterer bevorzugter Ausführungsformen der Erfindung beträgt die Spannung von 12 bis 50 V. Durch diese vergleichsweise hohe Spannung kann das Wiederablösen besonders schnell erfolgen; die Spannung muss dabei nur für wenige Sekunden angelegt werden.

Dem Fachmann ist grundsätzlich bekannt, wie eine Spannung anzulegen ist, ohne, dass es zu unerwünschten Kurzschlüssen kommt.

Die zeitliche Dauer des Anlegens der Spannung in Schritt i.) kann, insbesondere in Abhängigkeit der gewählten Spannung, von wenigen Sekunden, insbesondere 2 Sekunden, bis zu 900 Sekunden, bevorzugt bis zu 600 Sekunden, besonders bevorzugt bis zu 300 Sekunden, betragen.

Natürlich ist es auch denkbar, dass die Spannung für einen längeren Zeitraum als 900 Sekunden angelegt wird, insbesondere, wenn die Spannung vergleichsweise niedrig ist.

Durch das erfindungsgemäße Verfahren zum elektrischen Lösen des erfindungsgemäßen Verbundes lassen sich die Substrate A und B auf eine schnelle und einfache Weise voneinander lösen, ohne dass ein allzu großer Kraftaufwand erforderlich ist.

Sofern sich die Schichten nach Anlegen der Spannung nicht ohne weitere Einwirkung voneinander lösen, umfasst das erfindungsgemäße Verfahren wenigstens den weiteren Verfahrensschritt:

ii.) Krafteinwirkung auf die Klebemasseschicht D und/oder das Substrat A und/oder das Substrat B, sodass der Abstand zwischen den Substraten A und B vergrößert wird.

Die Kraft, die gemäß Schritt ii.) eventuell noch erforderlich ist, ist deutlich geringer als vor dem Anlegen der Spannung gemäß Schritt i.)

Das Anlegen der Spannung gemäß Schritt i.) erfolgt an zwei verschiedenen Stellen des erfindungsgemäßen verklebten Verbundes. An welche Stellen die Spannung zweckmäßig angelegt wird, hängt vom Aufbau des Klebebandes und des verklebten Verbundes und somit der Beschaffenheit der einzelnen Schichten und miteinander verklebten Substrate A und B ab.

Im Folgenden werden einige bevorzugte Ausführungsformen ausgeführt.

Gemäß bevorzugter Ausführungsformen ist das Klebeband ein Transferklebeband und besteht aus der Klebemasseschicht D.

Ein solches Klebeband kann in einem verklebten Verbund mit zwei Substraten A und B vorteilhafterweise dadurch elektrisch wieder gelöst werden, dass beide Substrate A und B elektrisch leitfähig sind. Hierzu wird dann eine Spannung an die Substrate A und B angelegt, sodass es in der Klebemasse zu einer Wanderung von Anionen zur Anode und von Kationen zur Kathode kommt. Ohne an eine bestimmte Theorie gebunden sein zu wollen, wird von den Erfindern folgender Mechanismus angenommen: Durch das Anlegen der Spannung erfolgt eine Wanderung des Elektrolyten, insbesondere eine Trennung der Anionen und Kationen einer ionischen Flüssigkeit, in der Klebemasseschicht D. Hierdurch wird die Adhäsion der Klebemasseschicht D an das Substrat A und das Substrat B stark herabgesetzt und es erfolgt ein Lösen dieser Schichten voneinander.

Gemäß bevorzugter Ausführungsformen der vorliegenden Erfindung umfasst der verklebte Verbund somit folgende Schichten:

- Ein erstes Substrat A, welches elektrisch leitfähig ist; und

- Ein zweites Substrat B, welches elektrisch leitfähig ist; und

- Ein erfindungsgemäßes Klebeband, welches aus der Klebemasseschicht D besteht und zwischen dem Substrat A und dem Substrat B angeordnet ist und die Substrate A und B miteinander verklebt.

Gemäß weiterer bevorzugter Ausführungsformen umfasst das Klebeband zusätzlich zur ersten Klebemasseschicht D wenigstens eine zweite Klebemasseschicht C.

Gemäß besonders bevorzugter Ausführungsformen der Erfindung ist die zweite Klebemasseschicht C dabei elektrisch leitfähig. Ein derartiger Aufbau hat den Vorteil, dass die Spannung an die Klebemasseschicht C angelegt werden kann, sodass auch ein nichtleitfähiges Substrat, hier Substrat B, elektrisch wieder gelöst werden kann.

Gemäß bevorzugter Ausführungsformen der Erfindung überragt die Klebemasseschicht C das an sie gebundene Substrat dabei seitlich, sodass an die Schicht C von oben, also neben dem Substrat, eine Spannung angelegt werden kann.

Gemäß bevorzugter Ausführungsformen der Erfindung weist das an die Schicht C gebundene Substrat, hier Substrat B, ein Loch auf, sodass auch hier die Klebemasseschicht C das an sie gebundene Substrat seitlich überragt. Auch hier kann an die Schicht C von oben, also neben dem Substrat, eine Spannung angelegt werden.

Die genannten Möglichkeiten sind insbesondere dann von Vorteil, wenn die Schicht C so dünn ausgestaltet ist, dass ein seitliches Anlegen an die Schicht nicht praktikabel ist. Andernfalls kann aber auch eine entsprechend dünn ausgestaltete Elektrode verwendet werden.

Gemäß besonders bevorzugter Ausführungsformen der Erfindung ist die zweite Klebemasseschicht C dabei ebenfalls eine reaktive, hitzeaktivierbare Klebemasse. Hierdurch kann das Klebeband weiterhin bei solchen Substraten bzw. Anwendungen verwendet werden, wo ein reaktives, hitzeaktivierbares Klebeband gewünscht ist. Zudem sind die erste und zweite Klebemasseschicht D und C somit besonders kompatibel.

Bevorzugt besteht das Klebeband gemäß der vorstehend beschriebenen Ausführungsformen aus den Schichten D und C. Der Aufbau umfassend die zweite Klebemasseschicht wird im Folgenden auch als Zweischichtverbund D-C bezeichnet.

Gemäß bevorzugter Ausführungsformen weist die Schicht D in der xy-Ebene die gleichen Dimensionen auf wie die Schicht C, sodass D und C als Zweischichtverbund gemeinsam verarbeitet und zum Beispiel gestanzt werden können.

Gemäß bevorzugter Ausführungsformen der vorliegenden Erfindung umfasst der verklebte Verbund somit folgende Schichten:

- Ein erstes Substrat A, welches elektrisch leitfähig ist; und

- Ein zweites Substrat B; und

- Ein erfindungsgemäßes Klebeband, welches aus dem Zweischichtverbund D-C besteht und die Substrate A und B so miteinander verklebt, dass die Klebemasseschicht D an das leitfähige Substrat A gebunden ist.

Das Substrat B muss hierbei nicht elektrisch leitfähig sein, wie oben beschrieben. Gemäß bevorzugter Ausführungsformen ist das Substrat B hierbei nicht elektrisch leitfähig.

Gemäß weiterer bevorzugter Ausführungsformen umfasst das Klebeband zusätzlich zur ersten Klebemasseschicht D wenigstens die folgenden Schichten:

- Eine zweite Klebemasseschicht C; und

- wenigstens eine elektrisch leitfähige Trägerschicht T, die zwischen den Schichten D und C angeordnet ist.

Ein derartiges Klebeband kann als doppelseitiges Klebeband über die zweite Klebemasseschicht C an eine Vielzahl unterschiedlicher Substrate angepasst werden. Hierbei kann es sich prinzipiell um die gleichen Substrate handeln wie gemäß der vorherigen Ausführungsformen, in denen das Klebeband ein Transferklebeband ist.

Ein derartiges Klebeband kann zudem aber insbesondere und vorteilhafterweise auch verwendet werden, um später Substrate A und B voneinander zu lösen, von denen nur eines elektrisch leitfähig ist, zum Beispiel das Substrat A.

Gemäß bevorzugter Ausführungsformen sind entweder xi.) nur die Trägerschicht T oder xii.) die Trägerschicht T und die zweite Klebemasseschicht C elektrisch leitfähig ausgestaltet.

Hierdurch kann eine Spannung an xi.) die elektrisch leitfähige Trägerschicht oder xii.) an die zweite Klebemasseschicht C sowie an das leitfähige Substrat A angelegt werden.

Das Klebeband wird zuvor vorteilhafterweise als doppelseitiges Klebeband so verklebt, dass die elektrisch lösbare Klebemasseschicht D an das leitfähige Substrat A gebunden ist und die zweite Klebemasseschicht an das Substrat B, welches leitfähig sein kann, aber nicht muss.

Ohne an eine bestimmte Theorie gebunden sein zu wollen, wird von den Erfindern folgender Mechanismus angenommen: Durch das Anlegen der Spannung erfolgt eine Wanderung des Elektrolyten, insbesondere eine Trennung der Anionen und Kationen einer ionischen Flüssigkeit, in der Klebemasseschicht D. Hierdurch wird die Adhäsion der Klebemasseschicht D an das Substrat A stark herabgesetzt und es erfolgt ein Lösen dieser Schichten voneinander.

Gemäß bevorzugter Ausführungsformen der Erfindung ist xi.) nur die Trägerschicht elektrisch leitfähig. Hieran kann besonders gut eine Spannung angelegt werden, insbesondere und bevorzugt, wenn die Trägerschicht wenigstens eine der Klebemasseschichten seitlich überragt.

Gemäß weiterer bevorzugter Ausführungsformen der Erfindung sind xii.) die Trägerschicht und die zweite Klebemasseschicht C elektrisch leitfähig. Ein derartiger Aufbau hat den Vorteil, dass die Spannung an die Klebemasseschicht C angelegt werden kann. Ein seitlicher Überstand der Trägerschicht ist nicht notwendig. Das Klebeband lässt sich daher auf einfache Weise herstellen, insbesondere da die Schichten D, T und C gemeinsam gestanzt werden können.

Bevorzugt besteht das Klebeband gemäß der vorstehend beschriebenen Ausführungsformen aus den drei Schichten D, T und C. Hierfür wird im Rahmen der vorliegenden Anmeldung auch der Begriff Dreischichtverbund D-T-C verwendet.

Gemäß bevorzugter Ausführungsformen der vorliegenden Erfindung umfasst der verklebte Verbund somit folgende Schichten:

- Ein erstes Substrat A, welches elektrisch leitfähig ist; und

- Ein zweites Substrat B; und

- Ein erfindungsgemäßes Klebeband, welches aus dem Dreischichtverbund D-T-C besteht und die Substrate A und B so miteinander verklebt, dass die Klebemasseschicht D an das leitfähige Substrat A gebunden ist.

Gemäß weiterer bevorzugter Ausführungsformen umfasst das Klebeband zusätzlich zur ersten Klebemasseschicht D wenigstens die folgenden Schichten:

- Eine zweite Klebemasseschicht C; und

- wenigstens eine erste elektrisch leitfähige Trägerschicht T, die zwischen den Schichten D und C angeordnet ist; und

- wenigstens eine zweite elektrisch leitfähige Trägerschicht T', die auf der der ersten elektrisch leitfähigen Trägerschicht T gegenüberliegenden Fläche der Klebemasseschicht D angeordnet ist; und

- Eine dritte Klebemasseschicht C', die auf der der ersten Klebemasseschicht D gegenüberliegenden Fläche der zweiten elektrisch leitfähigen Trägerschicht T' angeordnet ist.

Ein derartiges Klebeband hat wenigstens den Schichtaufbau C-T-D-T'-C' und kann als doppelseitiges Klebeband über die Klebemasseschichten C und C' an eine Vielzahl unterschiedlicher Substrate angepasst werden.
Hierbei kann es sich prinzipiell um die gleichen Substrate handeln wie gemäß der vorherigen Ausführungsformen, in denen das Klebeband ein Transferklebeband ist oder den Dreischichtaufbau D-T-C hat.
Ein derartiges Klebeband kann insbesondere und vorteilhafterweise aber auch verwendet werden, um später Substrate A und B voneinander zu lösen, von denen keines elektrisch leitfähig ist.
Gemäß bevorzugter Ausführungsformen sind entweder xi.) nur die Trägerschichten T und T' oder xii.) die Trägerschichten T und T' und die zweite Klebemasseschicht C und/oder die dritte Klebemasseschicht C' elektrisch leitfähig ausgestaltet.
Hierdurch kann eine Spannung an xi.) die beiden elektrisch leitfähigen Trägerschichten oder xii.) an wenigstens eine der Klebemasseschichten C und C' und an eine der Trägerschichten oder die andere Klebemasseschicht angelegt werden.
Analog zu obigen Ausführungsformen wird angenommen, dass durch das Anlegen der Spannung eine Wanderung des Elektrolyten, insbesondere eine Trennung der Anionen und Kationen einer ionischen Flüssigkeit, in der Klebemasseschicht D erfolgt. Hierdurch wird die Adhäsion der Klebemasseschicht D an die elektrisch leitfähigen Trägerschichten T und T' stark herabgesetzt und es erfolgt ein Lösen dieser Schichten voneinander.
Gemäß bevorzugter Ausführungsformen der Erfindung sind xi.) nur die Trägerschichten T und T' elektrisch leitfähig. Hieran kann besonders gut eine Spannung angelegt werden, insbesondere und bevorzugt, wenn die Trägerschichten T und T' wenigstens eine der jeweils benachbarten Klebemasseschichten seitlich überragen.
Gemäß weiterer bevorzugter Ausführungsformen der Erfindung sind xii.) die Trägerschichten T und T' und die zweite und die dritte Klebemasseschicht C bzw. C' elektrisch leitfähig. Ein derartiger Aufbau hat den Vorteil, dass die Spannung an die Klebemasseschichten C und C' angelegt werden kann. Ein seitlicher Überstand der Trägerschichten T und T' ist nicht notwendig. Das Klebeband lässt sich daher auf einfache Weise herstellen, insbesondere da die Schichten C, T, D, T' und C' gemeinsam gestanzt werden können.
Bevorzugt besteht das Klebeband gemäß der vorstehend beschriebenen Ausführungsformen aus den fünf Schichten C, T, D, T' und C'. Hierfür wird im Rahmen der vorliegenden Anmeldung auch der Begriff Fünfschichtverbund C-T-D-T'-C' verwendet.
Gemäß bevorzugter Ausführungsformen der vorliegenden Erfindung umfasst der verklebte Verbund somit folgende Schichten:

- Ein erstes Substrat A; und

- Ein zweites Substrat B; und

- Ein erfindungsgemäßes Klebeband, welches aus dem Fünfschichtverbund C-T-D-T'-C' besteht und die Substrate A und B miteinander verklebt.

Das elektrisch leitfähige Substrat sämtlicher Ausführungsformen kann beispielsweise ein Gehäuse aus Metall von einem Mobiltelefon sein.
Bei dem elektrisch nicht leitfähigen Substrat sämtlicher Ausführungsformen kann es sich insbesondere um ein Gehäuse aus einem nicht leitfähigen Material, wie Plastik, oder eine Batterie oder andere nicht elektrisch leitfähig ausgestaltete Bauteile handeln, wie beispielsweise Lautsprecher.
Ein weiterer Gegenstand der vorliegenden Erfindung ist die Verwendung des erfindungsgemäßen Klebebands zur Verklebung von Bauteilen in elektronischen Geräten, Automobilen, medizinischen Geräten und zahnmedizinischen Geräten.

Die Trägerschichten T sowie T und T' sämtlicher vorstehend genannter Ausführungsformen sind elektrisch leitfähig.

Im Folgenden werden diese Schichten weiter ausgeführt. Der Einfachheit halber wird der Begriff "elektrisch leitfähige Trägerschicht" oder auch nur "Trägerschicht" verwendet. Dieser bezieht sich je nach den obigen Ausführungsformen auf die Trägerschicht T oder die Trägerschichten T und T'.

Die Trägerschichten T und T' sind unabhängig voneinander und können gleich oder verschieden voneinander ausgeführt sein.

Bevorzugt umfasst die elektrisch leitfähige Trägerschicht wenigstens ein Metall.

Besonders bevorzugt ist das Metall ausgewählt aus der Gruppe bestehend aus Kupfer, Nickel, Zink, Zinn, Silber, Gold, Aluminium, Eisen, Chrom und Legierungen dieser genannten Metalle. Ganz besonders bevorzugt ist das Metall ausgewählt aus der Gruppe bestehend aus Aluminium, Zink, Kupfer und Nickel. Ganz besonders bevorzugt ist Aluminium.

Bevorzugt weist die elektrisch leitfähige Trägerschicht eine Schichtdicke, gemessen in z-Richtung, also parallel zur Stapelrichtung der Schichtanordnung, von 10 nm (Nanometer) bis 50 $\mu$m (Mikrometer) auf.

Die elektrisch leitfähige Trägerschicht weist gemäß bevorzugter Ausführungsformen der Erfindung a) wenigstens eine Metallfolie, bevorzugt eine Aluminiumfolie, und/oder b) wenigstens ein elektrisch leitfähiges Textil aufweisend wenigstens ein Metall, bevorzugt ausgewählt aus der Gruppe bestehend aus Kupfer und Nickel, und/oder c) eine oder mehrere Lagen wenigstens eines aufgedampften Metalls, bevorzugt ausgewählt aus der Gruppe bestehend aus Kupfer und Aluminium, und/oder d) wenigstens ein Gitter aus Metall und/oder e) eine mit Metall bedampfte Folie auf.

Es ist dabei prinzipiell auch denkbar, dass die Schicht T eine Kombination von zwei oder mehreren der genannten Möglichkeiten aufweist.

Metallfolien, wie beispielsweise und bevorzugt Aluminiumfolien, sind dem Fachmann bekannt. Bevorzugt weist die Metallfolie, beispielsweise und bevorzugt die Aluminiumfolie, eine Schichtdicke, gemessen in z-Richtung, also parallel zur Stapelrichtung der Schichtanordnung, von 5 bis 50 $\mu$m, besonders bevorzugt von 10 bis 30 $\mu$m auf.

Elektrisch leitfähige Textilien sind dem Fachmann bekannt, insbesondere unter dem englischen Ausdruck "conductive mesh". Hierbei handelt es sich um ein textiles Gewebe, zum Beispiel aus PET (Polyethylenterephthalat), welches mit einem Metall, zum Beispiel mit Kupfer und/oder Nickel, beschichtet ist, wodurch die elektrische Leitfähigkeit des Gewebes hergestellt ist.

Dem Fachmann ist ebenfalls bekannt, dass Metalle direkt als Monolage oder Mehrfachlage auf Flächen, wie hier die Oberfläche einer Klebemasseschicht aufgedampft werden können. Im Rahmen der vorliegenden Erfindung kann die elektrisch leitfähige Trägerschicht durch Aufdampfen von Metall auf die Klebemasseschicht D oder die Klebemasseschicht C oder die Klebemasseschicht C' bereitgestellt werden.

Ferner sind dem Fachmann Gitter aus Metall unterschiedlicher Dimensionen bekannt. Metallgitter mit geeigneten Schichtdicken können beispielsweise durch ein Gelege aus entsprechend dünnen Metallfäden oder durch Stanzen wenigstens einer Folie entsprechender Schichtdicke hergestellt sein.

Bei einer mit Metall bedampften Folie wird insbesondere eine nicht leitfähige Folie mit Metall bedampft, um diese elektrisch leitfähig auszubilden. Das Material der Folie kann prinzipiell ausgewählt sein aus sämtlichen Materialien, die dazu geeignet sind mit Metall bedampft zu werden und als Trägerfolie in Klebebändern verwendet zu werden. Das Material ist insbesondere ausgewählt aus Polyestern und Polyolefinen, wobei auch eine Mischung mehrerer Materialien denkbar ist. Als Polyester sind insbesondere Polyethylenterephthalat (PET) und Polyethylennaphthalat (PEN) bevorzugt. Als Polyolefine sind insbesondere Polypropylen (PP), Polyethylen (PE) bevorzugt. Gemäß bevorzugter Ausführungsformen ist das Material der Folie ausgewählt aus der Gruppe bestehend aus PET, PEN, PE, PP. Bevorzugt handelt es sich um eine Folie aus PET (Polyethylenterephthalat). Eine derartige Folie ist dimensionsstabil und somit gut verarbeitbar, ohne sich signifikant zu dehnen oder zu zerreißen. Hierdurch ist es möglich eine homogene und lückenlose Metallschicht dauerhaft aufzubringen, sodass die elektrische Leitfähigkeit, insbesondere in z-Richtung, über die gesamte Folie dauerhaft gewährleistet ist.

In den Ausführungsformen, in denen wenigstens eine elektrisch leitfähige Trägerschicht T oder wenigstens zwei elektrisch leitfähige Trägerschichten T und T' vorhanden sind, ist es bevorzugt, dass diese wenigstens eine benachbarte Klebemasseschicht in wenigstens einer Erstreckungsrichtung der Schichtebene seitlich überragen und somit einen seitlichen Überstand aufweisen. An diesen seitlichen Überstand kann dann auf einfache Weise eine Spannung angelegt werden.

Im Fall des Fünfschichtverbundes sind die seitlichen Überstände der elektrisch leitfähigen Trägerschichten T und T' gemäß vorteilhafter Ausführungsformen räumlich getrennt voneinander angeordnet. Dies erleichtert es eine Spannung an diese beiden Überstände anzulegen.

Im Fall von aufgedampftem Metall als Trägerschicht ist es bevorzugt, dass diese Trägerschicht nur eine benachbarte Klebemasseschicht in wenigstens einer Erstreckungsrichtung der Schichtebene seitlich überragt und die jeweils andere Klebemasseschicht als mechanische Stütze dieser Metallschicht dient. Hierbei hat die Metallschicht keine eigentliche Trägerfunktion. Stattdessen fungiert die andere Klebemasseschicht als Träger für die Metallschicht. Der Einfachheit halber wird der Begriff Trägerschicht für die Metallschicht aber auch in diesen Ausführungsformen beibehalten. Bevorzugt beträgt die Schichtdicke der Schicht T in diesem Fall größer oder gleich 10 nm (Nanometer), bevorzugt 50 bis 200 nm.

Gemäß bevorzugter Ausführungsformen der Erfindung weist die elektrisch leitfähige Trägerschicht T bzw. T und/oder T' a) wenigstens eine Metallfolie, bevorzugt eine Aluminiumfolie, und/oder b) wenigstens ein elektrisch leitfähiges Textil aufweisend wenigstens ein Metall, bevorzugt ausgewählt aus der Gruppe bestehend aus Kupfer und Nickel, und/oder d) wenigstens ein Gitter aus Metall und/oder e) eine mit Metall bedampfte Folie auf, und überragt die erste Klebemasseschicht D und die zweite Klebemasseschicht C oder die erste Klebemasseschicht D und die zweite Klebemasseschicht C und/oder die erste Klebemasseschicht D und die dritte Klebemasseschicht C' in wenigstens einer Erstreckungsrichtung.

Hierdurch kann auf einfache und sichere Weise eine Spannung an die Trägerschicht angelegt werden. Gleichzeitig kann das Klebeband auf vergleichsweise einfache Weise hergestellt werden.

Gemäß bevorzugter Ausführungsformen der Erfindung weist die elektrisch leitfähige Trägerschicht T bzw. T und/oder T' eine oder mehrere Lagen, bevorzugt eine Lage, wenigstens eines aufgedampften Metalls, bevorzugt ausgewählt aus der Gruppe bestehend aus Kupfer und Aluminium, auf.

Gemäß besonders bevorzugter Ausführungsformen der Erfindung weist die elektrisch leitfähige Trägerschicht T bzw. T und/oder T' e) eine mit Metall bedampfte Folie auf, und überragt die erste Klebemasseschicht D in wenigstens einer Erstreckungsrichtung. Hierbei ist die Folie insbesondere auf einer Oberfläche mit Metall bedampft und die jeweilige Trägerschicht über die metallisierte Fläche an die erste Klebemasseschicht D, und damit an die elektrisch ablösbare Schicht, gebunden.

Hierdurch kann auf einfache und sichere Weise eine Spannung an die Trägerschicht angelegt werden.

Unter dem Ausdruck "seitlich überragen" ist im Rahmen der vorliegenden Erfindung jegliche Art von seitlichem Überstand der angesprochenen Schicht oder Schichten gemeint und bedeutet, dass sich die jeweils angesprochene Schicht insbesondere in der "xy"-Ebene und somit seitlich - senkrecht zur Stapelrichtung - weiter erstreckt als die Bezugsschicht. Anstelle des Begriffes "seitlicher Überstand" werden im Rahmen der vorliegenden Erfindung auch die Begriffe "seitliche Verlängerung" oder "seitlicher Verlängerungsabschnitt" verwendet.

Der Begriff "seitlich" ist hier auf jede Erstreckungsrichtung der Schichtebene "xy" senkrecht zur Stapelrichtung der Schichten "z" bezogen. Der Begriff ist damit insbesondere unabhängig von der geometrischen Form des Klebebandes in der "xy"-Ebene, welche zum Beispiel ein Rechteck, wie für Klebebänder üblich (s. oben), aber auch ein Quadrat oder ein Kreis sein kann.

Geringfügige Schwankungen der Maße der einzelnen Schichten in der "xy"-Ebene, die sich aufgrund des Stanzverfahrens oder ähnlichen formgebenden Verfahren ergeben, sind hiermit nicht angesprochen, insbesondere da solche geringfügigen Materialüberstände aufgrund der Dimensionen nicht dazu geeignet sind, planmäßig eine Spannung daran anzulegen.

Die Klebemasseschichten C bzw. C und C' können prinzipiell auf den gleichen Massen basieren wie die Klebemasseschicht D, wobei die Klebemassen der Schichten C bzw. C und C' keine Elektrolyten enthalten müssen, aber können. Bevorzugt enthalten die Schichten C bzw. C und C' keine Elektrolyten.

Gemäß einiger oben beschriebener Ausführungsformen des Zweischichtverbundes D-C ist die Klebemasseschicht C elektrisch leitfähig.

Gemäß einiger oben beschriebener Ausführungsformen des Dreischichtverbundes D-T-C ist die Klebemasseschicht C elektrisch leitfähig.

Gleichermaßen kann auch die Klebemasseschicht C und/oder die Klebemasseschicht C' des Fünfschichtverbundes C-T-D-T'-C' elektrisch leitfähig ausgestaltet sein.

Im Folgenden werden diese Schichten weiter ausgeführt. Der Einfachheit halber wird an geeigneten Stellen der Begriff "elektrisch leitfähige Klebemasseschicht" verwendet. Dieser bezieht sich je nach den obigen Ausführungsformen auf die Klebemasseschicht C oder die Klebemasseschichten C und/oder C'. Ferner wird der Einfachheit halber der Ausdruck "die Klebemasseschichten C bzw. C und/oder C'" verwendet, womit die jeweiligen Schichten in den beschriebenen Ausführungsformen des Klebebandes umfassend wenigstens den Zweischichtverbund, Dreischichtverbund oder wenigstens den Fünfschichtverbund gemeint sind.

Die Klebemasseschichten C und C' sind unabhängig voneinander und können gleich oder verschieden voneinander sein.

Bevorzugt enthält die elektrisch leitfähige Klebemasseschicht hierzu wenigstens ein Metall, wie insbesondere Nickel, Kupfer, Silber, bevorzugt in Form von elektrisch leitfähigen Metallpartikeln und/oder metallisierten Partikeln, besonders bevorzugt Metallpartikeln. Metallisierte Partikel sind insbesondere und bevorzugt Glas- oder Polymerpartikel, die mit wenigstens einem Metall metallisiert sind, sodass die zuvor elektrisch nicht leitfähigen Partikel durch die Metallisierung elektrisch leitfähig ausgestaltet sind.

Besonders bevorzugt enthält die elektrisch leitfähige Klebemasseschicht elektrisch leitfähige Partikel, die ausgewählt sind aus der Gruppe bestehend aus Nickelpartikeln, Kupferpartikeln und versilberten Kupferpartikeln.

Gemäß besonders bevorzugter Ausführungsformen enthält die elektrisch leitfähige Klebemasseschicht Nickelpartikel.

Bevorzugt enthält die elektrisch leitfähige Klebemasseschicht 5 bis 65 Gew.-%, besonders bevorzugt 20 bis 62 Gew.-%, an elektrisch leitfähigen Partikeln, insbesondere Metallpartikeln und/oder metallisierten Partikeln, bezogen auf die Gesamtmenge der Klebemasse.

Die elektrisch leitfähigen Partikel sollten bevorzugt nicht oder nicht deutlich größer sein als die jeweilige Dicke der elektrisch leitfähigen Klebemasseschicht in z-Richtung, gemessen mit dem Lichtmikroskop.

Bevorzugt weisen die elektrisch leitfähigen Partikel eine durchschnittliche Partikelgröße von 1 bis 10 $\mu$m, besonders bevorzugt von 1 bis 6 $\mu$m, wiederum bevorzugt von 3 bis 5 $\mu$m, wie insbesondere 4 $\mu$m, auf.

Die elektrisch leitfähige Klebemasseschicht ist insbesondere wenigstens in z-Richtung elektrisch leitfähig.

Sie kann aber auch in der xy-Ebene elektrisch leitfähig sein. Wenn die elektrisch leitfähige Klebemasseschicht lediglich in z-Richtung, nicht aber notwendigerweise in xy-Richtung elektrisch leitfähig ausgestaltet ist, ist gemäß bevorzugter Ausführungsformen, in denen ein Metall, insbesondere Metallpartikel, zugegeben werden, um die elektrische Leitfähigkeit zu erzielen, eine geringere Menge dieser Materialien notwendig. Hierdurch ist die Klebemasse hinsichtlich erforderlicher Leitfähigkeit, Verklebungsfestigkeit, Fließverhalten und der Kosten optimiert.

Eine Schicht gilt im Rahmen der vorliegenden Erfindung insbesondere dann als "elektrisch leitfähig", wenn der Widerstand kleiner als 1 Ohm ist, gemessen in der jeweiligen Richtung, hier insbesondere in z-Richtung, nach dem Standard MIL-DTL-83528C.

Unabhängig davon, ob die Klebemasseschichten C bzw. C und/oder C' elektrisch leitfähig ausgestaltet sind gelten folgende Ausführungen.

Die Klebemasseschichten C bzw. C und/oder C' sind gemäß bevorzugter Ausführungsformen der Erfindung wie die Klebemasseschicht D reaktive hitzeaktivierbare Klebemassen, insbesondere auf Basis wenigstens eines thermoplastischen Polyurethans, welches nach Wärmezufuhr mit einer Vernetzer-Komponente reagiert.

Gemäß bevorzugter Ausführungsformen der Erfindung wird in den Klebemasseschichten C bzw. C und/oder C' das gleiche Polymer und die gleiche Vernetzer-Komponente verwendet, wie in der Klebemasseschicht D.

Hierdurch können insbesondere ähnliche Substrate, hier als A und B bezeichnet, miteinander verklebt sein.

Gemäß weiterer bevorzugter Ausführungsformen der Erfindung wird in den Klebemasseschichten C bzw. C und/oder C' eine von der Klebemasse der Klebemasseschicht D verschiedene Klebemasse verwendet.

Hierdurch können die Eigenschaften der leitfähigen Schicht besonders gut an das oder die Substrate angepasst werden, welches über die Klebemasseschicht C bzw. C und/oder C' verklebt ist. Dadurch, dass die Klebemasseschicht C bzw. C und/oder C' bevorzugt keinen Elektrolyten, wie eine ionische Flüssigkeit enthält bzw. enthalten muss, müssen die Bestandteile hierauf nicht abgestimmt werden.

Bevorzugt ist die Klebemasse der Klebemasseschicht D nicht haftklebrig und damit bevorzugt keine Haftklebemasse und die Klebemasseschicht D damit bevorzugt keine Haftklebemasseschicht D.

Die Klebemasse der Klebemasseschichten C bzw. C und/oder C' ist gemäß bevorzugter Ausführungsformen ebenfalls keine Haftklebemasse.

Gemäß weiterer bevorzugter Ausführungsformen der Erfindung ist die Klebemasse der Klebemasse der Klebemasseschichten C bzw. C und C' eine Haftklebemasse und die Klebemasseschicht C bzw. C und C' damit eine Haftklebemasseschicht.

Unter einer Haftklebemasse wird vorliegend erfindungsgemäß, wie allgemein üblich, ein Stoff verstanden, der - insbesondere bei Raumtemperatur - dauerhaft klebrig sowie klebfähig ist. Charakteristisch für eine Haftklebemasse ist, dass sie durch Druck auf ein Substrat aufgebracht werden kann und dort haften bleibt, wobei der aufzuwendende Druck und die Einwirkdauer dieses Drucks nicht näher definiert werden. In manchen Fällen, abhängig von der genauen Art der Haftklebemasse, der Temperatur und der Luftfeuchtigkeit sowie dem Substrat, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebemassen haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad der Haftklebemasse als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Auffließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA, gemäß DIN EN ISO 6721) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel $\delta$ bezeichnet.

Der Speichermodul G' ist wie folgt definiert:

$$G' = (\tau/\gamma) \cdot \cos(\delta)$$

($\tau$ = Schubspannung, $\gamma$ = Deformation, $\delta$ = Phasenwinkel = Phasenverschiebung zwischen Schubspannungs- und Deformationsvektor).

Die Definition des Verlustmoduls G" lautet:

$$G" = (\tau/\gamma) \cdot \sin(\delta)$$

($\tau$ = Schubspannung, $\gamma$ = Deformation, $\delta$ = Phasenwinkel = Phasenverschiebung zwischen Schubspannungs- und Deformationsvektor).

Ein Stoff gilt im Allgemeinen als haftklebrig und wird im Sinne der Erfindung als haftklebrig definiert, wenn bei Raumtemperatur, hier definitionsgemäß bei 23°C, im Deformationsfrequenzbereich von $10°$ bis $10^1$ rad/sec G' zumindest zum Teil im Bereich von $10^3$ bis $10^7$ Pa liegt und wenn G" ebenfalls zumindest zum Teil in diesem Bereich liegt. "Zum Teil" heißt, dass zumindest ein Abschnitt der G'-Kurve innerhalb des Fensters liegt, das durch den Deformationsfrequenzbereich von einschließlich $10°$ bis einschließlich $10^1$ rad/sec (Abszisse) sowie den Bereich der G'-Werte von einschließlich $10^3$ bis einschließlich $10^7$ Pa (Ordinate) aufgespannt wird. Für G" gilt dies entsprechend.

Bevorzugt weist die Haftklebemasse im Deformationsfrequenzbereich von $10°$ bis $10^1$ rad/sec bei 23 °C einen Speichermodul G' und einen Verlustmoduls G" im Bereich von $10^3$ bis $10^7$ Pa, bestimmt gemäß DIN EN ISO 6721, auf.

Zur Erzielung der viskoelastischen Eigenschaften werden die Monomere, auf denen die der Haftklebemasse zugrundeliegenden Polymere basieren, sowie die gegebenenfalls vorhandenen weiteren Komponenten der Haftklebemasse insbesondere derart gewählt, dass die Haftklebemasse eine Glasübergangstemperatur (nach DIN 53765) unterhalb der Anwendungstemperatur (also üblicherweise unterhalb der Raumtemperatur (23 °C)) aufweist. Durch geeignete kohäsionssteigernde Maßnahmen, wie beispielsweise Vernetzungsreaktionen (Ausbildung brückenbildender Verknüpfungen zwischen den Makromolekülen), kann der Temperaturbereich, in dem eine Polymermasse haftklebrige Eigenschaften aufweist, vergrößert und/oder verschoben werden. Der Anwendungsbereich der Haftklebemassen kann somit durch eine Einstellung zwischen Fließfähigkeit und Kohäsion der Masse optimiert werden.

Insbesondere weist eine Haftklebemasse eine Glasübergangstemperatur von $\leq$ 23 °C, bestimmt gemäß DIN 53765, auf.

Ein weiterer Gegenstand der vorliegenden Erfindung ist die Herstellung des erfindungsgemäßen Klebebandes.

Die Klebemasse der Klebemasseschicht D und je nach Ausführungsform weitere Klebemassen werden mittels bekannter Verfahren hergestellt und in Schichtform gebracht, insbesondere durch Ausstreichen.

Ferner können ggf. einer oder mehrere Trocknungsschritte erfolgen.

Das Laminieren mehrerer Schichten aufeinander erfolgt auf dem Fachmann bekannte Weise, wobei die Schichten so aufeinandergelegt werden, dass insbesondere ein Schichtverbund D-C oder DTC, wobei T zwischen D und C angeordnet ist, oder C'-T'-D-T-C als doppelseitiges Klebeband erhalten wird.

Das Bereitstellen der Trägerschichten T bzw. T' kann wie oben bereits ausgeführt auf verschiedene Weise erfolgen.

So ist es denkbar, dass a) eine Metallfolie, insbesondere eine Aluminiumfolie, und/oder b) ein elektrisch leitfähiges Netz und/oder d) wenigstens ein Gitter aus Metall und/oder e) eine mit Metall bedampfte PET-Folie zwischen den jeweiligen Klebemasseschichten platziert wird.

Ferner können c) Metallpartikel direkt auf die Oberfläche der Klebemasseschicht D oder C oder C' aufgedampft werden.

Ein weiterer Gegenstand der vorliegenden Erfindung ist die Herstellung eines verklebten Verbundes unter Verwendung des erfindungsgemäßen Klebebandes.

Zum Aktivieren der reaktiven hitzeaktivierbaren Klebemasse des erfindungsgemäßen Klebebandes wird dieses zwischen die zu verklebenden Substrate gebracht und, bevorzugt unter Anwendung eines Verpressdruckes, erwärmt, wobei sämtliche obige Ausführungen zur Aktivierung des Verklebungsmechanismus gelten. Ferner findet bevorzugt wie oben ebenfalls ausgeführt eine Vor-Laminierung statt.

Das erfindungsgemäße Klebeband stellt insbesondere ein doppelseitiges Klebeband dar, bei dem je nach Ausführungsform zwei Flächen der Klebemasseschicht D (Transferklebeband) oder eine Fläche der ersten Klebemasseschicht D und eine Fläche der zweiten Klebemasseschicht C (Zweischichtverbund D-C oder Dreischichtverbund D-T-C) oder jeweils eine Fläche der Klebemasseschichten C und C' (Fünfschichtverbund C-T-D-T'-C') jeweils zum Verkleben von Substraten verfügbar sind.

Vorteilhaft können die äußeren, frei liegenden Flächen der Klebemasseschichten des erfindungsgemäßen Klebebandes mit antiadhäsiven Materialien ausgerüstet sein wie mit einem Trennpapier oder einer Trennfolie, auch Liner genannt. Bei einem Liner kann es sich auch um mindestens einseitig, vorzugsweise beidseitig, antiadhäsiv beschichtetes Material handeln, wie beispielsweise beidseitig silikonisiertes Material. Ein Liner, bzw. allgemeiner formuliert, ein temporärer Träger, ist nicht Bestandteil eines Klebebands, sondern nur ein Hilfsmittel zu dessen Herstellung, Lagerung und/oder für die Weiterverarbeitung durch Stanzen. Darüber hinaus ist ein Liner im Gegensatz zu einem permanenten Träger nicht fest mit einer Klebstoffschicht verbunden, sondern fungiert vielmehr als temporärer Träger, d.h. als Träger, der von der Klebstoffschicht abziehbar ist. "Permanente Träger" werden in der vorliegenden Anmeldung synonym auch einfach "Träger" genannt.

Die Dicke der einzelnen Klebemasseschicht(en) (in z-Richtung) beträgt bevorzugt von 10 bis 300 $\mu$m, besonders bevorzugt 15 bis 150 $\mu$m, ganz besonders bevorzugt von 20 bis 100 $\mu$m, ganz besonders bevorzugt von 25 bis 70 $\mu$m.

In den Ausführungsformen des Zweischichtverbundes D-C, Dreischichtverbundes D-T-C sowie des Fünfschichtverbundes C-T-D-T'-C' weisen die Klebemasseschichten D und C bzw. D und C sowie D und C' gemäß bevorzugter Ausführungsformen unterschiedliche Schichtdicken auf, wobei die Dicke der Klebemasseschicht D beispielsweise geringer ist als die der Klebemasseschichten C bzw. C und C'.

Gemäß weiterer bevorzugter Ausführungsformen weisen die Schichten D und C bzw. D, C und C' die gleiche Schichtdicke auf.

Wenn die Schichtdicke der Schicht D zu hoch ist, wird diese aufgrund der enthaltenen Elektrolyten ggf. unwirtschaftlich teuer.

Nachfolgend werden bevorzugte Ausführungsformen der Erfindung unter Bezugnahme auf die beiliegenden Figuren näher erläutert und beschrieben. Dabei zeigen:

Fig. 1 eine vereinfachte schematische Querschnittsdarstellung durch ein erfindungsgemäßes doppelseitiges Klebeband in einer bevorzugten Ausführungsform; und

Fig. 2 eine vereinfachte schematische Querschnittsdarstellung durch ein erfindungsgemäßes doppelseitiges Klebeband in einer bevorzugten Ausführungsform; und

Fig. 3 eine vereinfachte schematische Querschnittsdarstellung durch ein erfindungsgemäßes doppelseitiges Klebeband in einer bevorzugten Ausführungsform; und

Fig. 4 eine vereinfachte schematische Querschnittsdarstellung durch einen erfindungsgemäßen verklebten Verbund einer bevorzugten Ausführungsform; und

Fig. 5 eine vereinfachte schematische Querschnittsdarstellung durch einen erfindungsgemäßen verklebten Verbund, an den eine Spannung angelegt ist, in einer bevorzugten Ausführungsform; und

Fig. 6 eine vereinfachte schematische Querschnittsdarstellung durch einen erfindungsgemäßen verklebten Verbund, nachdem eine Spannung angelegt wurde und hierdurch eine adhäsive Spaltung erfolgt ist; und

Fig. 7 eine vereinfachte schematische Querschnittsdarstellung durch einen erfindungsgemäßen verklebten Verbund einer bevorzugten Ausführungsform; und

Fig. 8 eine vereinfachte schematische Querschnittsdarstellung durch einen erfindungsgemäßen verklebten Verbund einer bevorzugten Ausführungsform.

Fig. 9 eine vereinfachte schematische Querschnittsdarstellung durch ein erfindungsgemäßes doppelseitiges Klebeband in einer bevorzugten Ausführungsform; und

Fig. 10 eine vereinfachte schematische Querschnittsdarstellung durch einen erfindungsgemäßen verklebten Verbund, an den eine Spannung angelegt ist, in einer bevorzugten Ausführungsform; und

Fig. 11 eine vereinfachte schematische Querschnittsdarstellung durch einen erfindungsgemäßen verklebten Verbund, nachdem eine Spannung angelegt wurde und hierdurch eine adhäsive Spaltung erfolgt ist; und

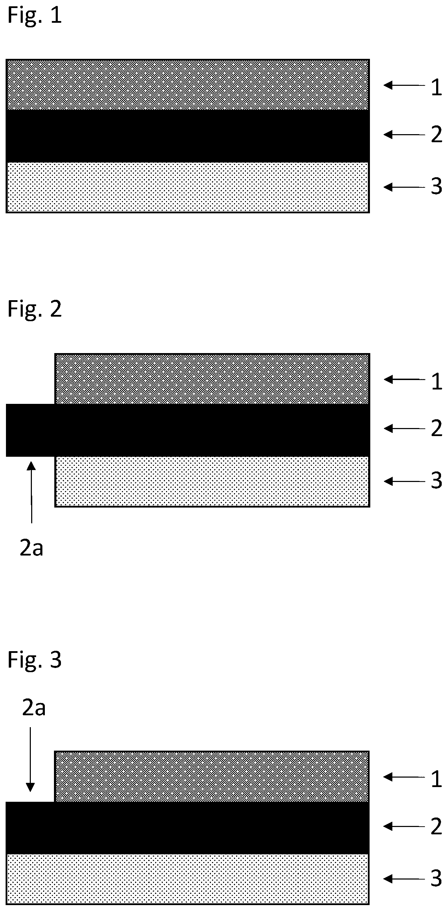

Wie in Fig. 1 erkennbar ist die Klebemasseschicht D 1 über eine ihrer Flächen mit der Trägerschicht T 2 verbunden. Auf der der Schicht D gegenüberliegenden Fläche der Trägerschicht T ist die zweite Klebemasseschicht C 3 angeordnet.

Wie in Fig. 1 ebenfalls erkennbar stellt der Schichtverbund ein doppelseitiges Klebeband dar, bei dem eine Fläche der Klebemasseschicht D und eine Fläche der zweiten Klebemasseschicht C jeweils zum Verkleben verfügbar sind.

In Fig. 2 ist eine bevorzugte Ausführungsform der Erfindung dargestellt. Hierbei überragt die elektrisch leitfähige Trägerschicht T 2 die Klebemasseschicht D 1 und die zweite Klebemasseschicht C 3 in wenigstens einer Erstreckungsrichtung der Schichtebene seitlich, sodass die elektrisch leitfähige Trägerschicht T 2 einen Überstand mit wenigstens einer freien Fläche 2 a aufweist.

In Fig. 3 ist eine weitere bevorzugte Ausführungsform der Erfindung dargestellt. Hierbei überragt die elektrisch leitfähige Trägerschicht T 2 die Klebemasseschicht D 1 in wenigstens einer Erstreckungsrichtung der Schichtebene seitlich, sodass die elektrisch leitfähige Trägerschicht T 2 einen Überstand mit einer freien Fläche 2 a aufweist. In Fig 3 ist die Klebemasseschicht C 3 so ausgebildet, dass sie ebenfalls einen Überstand relativ zur Schicht D 1 aufweist. Bei der Trägerschicht T 2 handelt es sich insbesondere um eine einseitig mit Aluminium beschichtete PET-Folie, wobei die aluminisierte Seite an die Schicht D 1 gebunden ist.

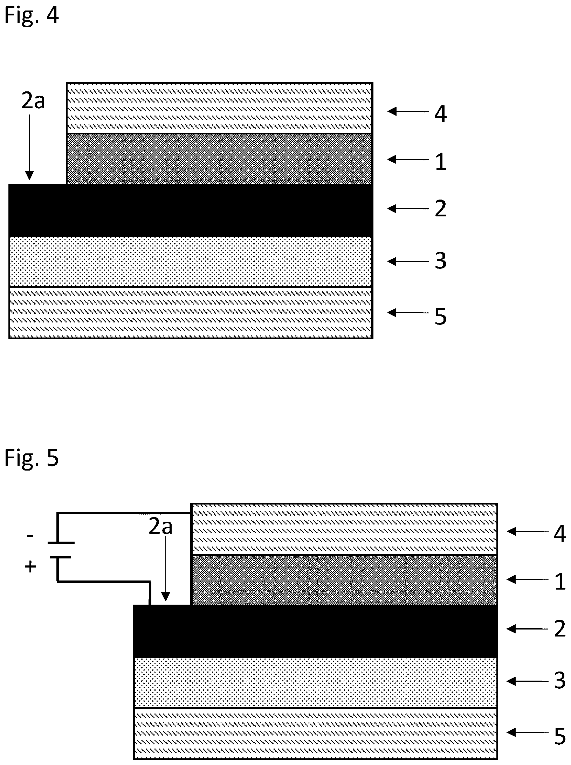

In Fig. 4 ist eine schematische Darstellung des erfindungsgemäßen verklebten Verbundes in einer bevorzugten Ausführungsform abgebildet. Wie anhand von Fig. 4 erkennbar, ist das Klebeband über die Klebemasseschicht D 1 auf einer Fläche des ersten Substrates A 4 angeordnet, wobei das erste Substrat elektrisch leitfähig ist.

Ferner ist das Klebeband über die zweite Klebemasseschicht C 3 auf einer Fläche eines zweiten Substrates B 5 angeordnet.

In Fig. 4 ist ebenfalls beispielhaft dargestellt, dass die elektrisch leitfähige Trägerschicht T 2 die Klebemasseschicht D 1 in wenigstens einer Erstreckungsrichtung der Schichtebene seitlich überragt, sodass die elektrisch leitfähige Trägerschicht T einen Überstand mit einer freien Fläche 2 a aufweist.

Über diese freie Fläche 2a kann nun eine Spannung angelegt werden, wie in der schematischen Darstellung gemäß Fig. 5 gezeigt.

Durch das Anlegen der Spannung erfolgt eine Wanderung des Elektrolyten, insbesondere eine Trennung der Anionen und Kationen einer ionischen Flüssigkeit, in der Klebemasseschicht D 1.

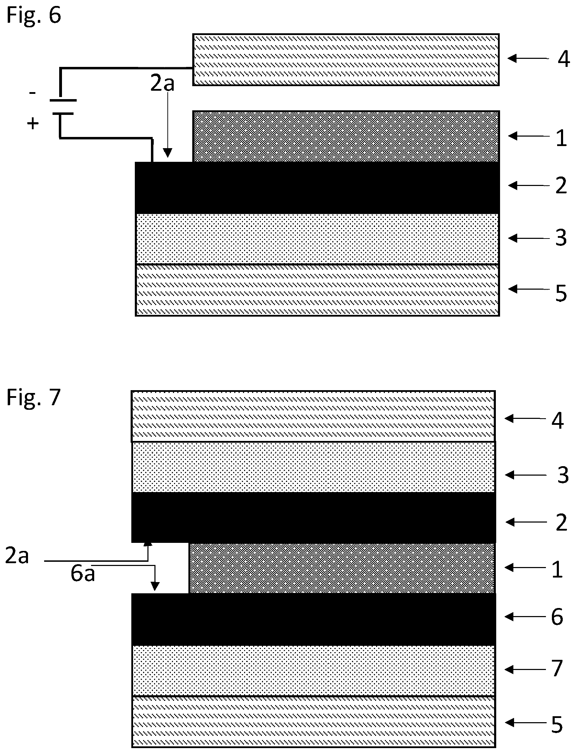

Hierdurch wird die Adhäsion der Klebemasseschicht D 1 an das Substrat A 4 stark herabgesetzt und es erfolgt ein Lösen dieser Schichten voneinander, wie an der schematischen Darstellung gemäß Fig. 6 erkennbar.

In Fig. 7 ist eine weitere schematische Darstellung des erfindungsgemäßen verklebten Verbundes in einer bevorzugten Ausführungsform abgebildet. Wie anhand von Fig. 7 erkennbar, ist das Klebeband über die Klebemasseschicht C 3 auf einer Fläche des ersten Substrates A 4 angeordnet.

Ferner ist das Klebeband über die dritte Klebemasseschicht C' 7 auf einer Fläche eines zweiten Substrates B 5 angeordnet.

Zwischen den Schichten C 3 und C' 7 befinden sich die elektrisch ablösbare Klebemasseschicht D 1 sowie zwei elektrisch leitfähige Trägerschichten T 2 und T' 6, wobei die Schicht D 1 zwischen den Trägerschichten angeordnet ist.

In Fig. 7 ist ebenfalls beispielhaft dargestellt, dass die elektrisch leitfähige Trägerschicht T 2 sowie die elektrisch leitfähige Trägerschicht T' 6 die Klebemasseschicht D 1 jeweils in wenigstens einer Erstreckungsrichtung der Schichtebene seitlich überragen, sodass die elektrisch leitfähige Trägerschicht T einen Überstand mit einer freien Fläche 2a und die elektrisch leitfähige Trägerschicht T' einen Überstand mit einer freien Fläche 6a aufweist.

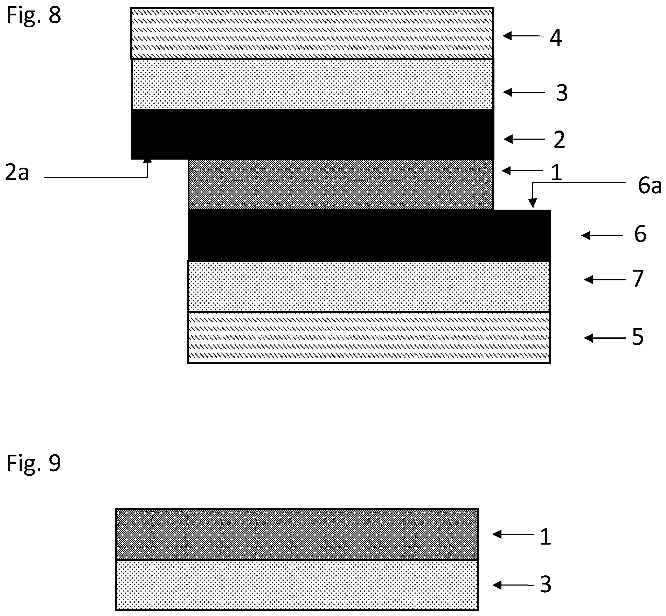

In Fig. 8 ist eine weitere schematische Darstellung des erfindungsgemäßen verklebten Verbundes in einer bevorzugten Ausführungsform abgebildet, welche der Darstellung gemäß Fig. 7 ähnlich ist. Im Unterschied zu Fig. 7 zeigen die Überstände der elektrisch leitfähigen Trägerschicht T 2 und der elektrisch leitfähigen Trägerschicht T' 6 jedoch in unterschiedliche Richtungen, sodass die resultierenden freien Flächen dieser Schichten 2a bzw. 6a räumlich getrennt sind.

Über diese freien Flächen 2a und 6a kann nun eine Spannung angelegt werden, analog zu Figur 5. Im Unterschied zur Ausführungsform gemäß Figur 5 kann die Spannung an die Flächen 2a und 6a angelegt werden, sodass keines der Substrate A und B elektrisch leitfähig sein muss.

Durch das Anlegen der Spannung erfolgt eine Wanderung des Elektrolyten, insbesondere eine Trennung der Anionen und Kationen einer ionischen Flüssigkeit, in der Klebemasseschicht D 1. Hierdurch wird die Adhäsion der Klebemasseschicht D 1 an die Trägerschichten T 2 und/oder T' 6 stark herabgesetzt und es erfolgt ein Lösen dieser Schichten voneinander. Insbesondere erfolgt ein Ablösen an die Schicht, an welche der Minuspol angelegt wird.

Das Anlegen der Spannung ist im Fall der räumlich getrennten Flächen 2a und 6a gemäß Fig. 8 vereinfacht.

In Fig. 9 ist schematisch der Zweischichtverbund aus der elektrisch ablösbaren und hierzu Elektrolyt-haltigen Klebemasseschicht D 1 und einer zweiten Klebemasseschicht C 3 dargestellt.

Bevorzugt ist diese zweite Klebemasseschicht, insbesondere in dieser Ausführungsform, elektrisch leitfähig.

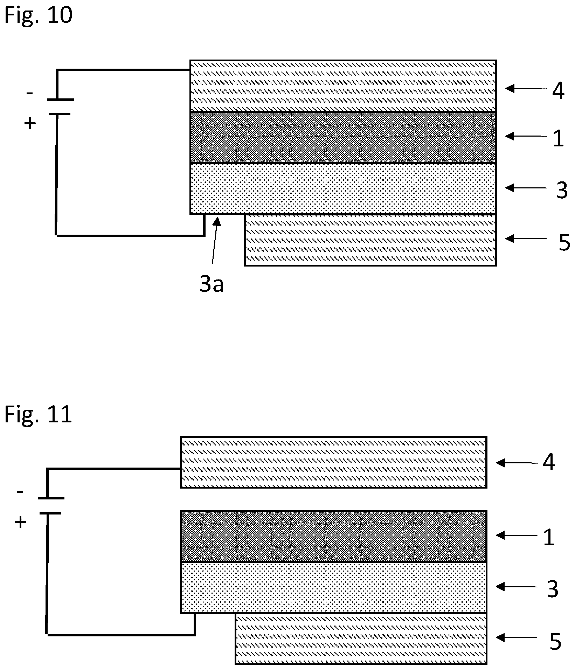

Hierdurch kann an diese eine Spannung angelegt werden, wie in Fig. 10 schematisch dargestellt. Wie in Fig. 10 ebenfalls dargestellt, überragt die leitfähige Schicht C 3 das Substrat 5 dabei seitlich, sodass eine freie Fläche 3a zur Verfügung steht, an diese eine Spannung angelegt werden kann. Das Anlegen der Spannung erfolgt hierbei somit an einer Stelle der Schicht C, die neben dem Substrat 5 angeordnet ist, und nicht seitlich.

Durch das Anlegen einer Spannung wird auch hier die Adhäsion der Klebemasseschicht D 1 an das Substrat A 4 verringert, sodass sich Substrat und Klebemasseschicht voneinander lösen, wie in Fig. 11 dargestellt.

Die Darstellungen in den Fig. 1 bis 11 sind wie ausgeführt schematische Darstellungen. Insbesondere können die Schichtdicken der einzelnen Schichten D, T und C voneinander abweichen. Ferner sind auch die Substrate A und B lediglich schematisch als weitere Schichten dargestellt. Diese können selbstverständlich jegliche andere räumliche Geometrie aufweisen.

Im Folgenden werden einige Beispiele beschrieben, um die Erfindung weiter zu verdeutlichen.

*Prüfmethoden*

Alle Messungen werden, sofern nichts anderes angegeben ist, bei 23 °C und 50 % relativer Luftfeuchtigkeit durchgeführt. Die mechanischen und klebtechnischen Daten wurden wie folgt ermittelt:

*Molekulargewicht $M_n$, $M_w$*

Die Angaben des zahlenmittleren Molekulargewichts $M_n$ bzw. gewichtsmittleren Molekulargewichts $M_w$ in dieser Schrift beziehen sich auf die Bestimmung per Gelpermeationschromatographie (GPC). Die Bestimmung erfolgt an 100 $\mu$l klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 $\mu$m, $10^3$ Å, 8,0 mm * 50 mm (Angaben hier und im Folgenden in der Reihenfolge: Typ, Partikelgrösse, Porosität, Innendurchmesser * Länge; 1 Å = $10^{-10}$ m) verwendet. Zur Auftrennung wird eine Kombination der Säulen des Typs PSS-SDV, 5 $\mu$m, $10^3$ Ä sowie $10^5$ Å und $10^6$ Å mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt bei polaren Molekülen gegen PMMA-Standards (Polymethylmethacrylat-Kalibrierung) und sonst gegen PS-Standards (Polystyrol-Kalibrierung).

*Dicke*

Die Dicke einer Klebemasseschicht kann durch Bestimmung der Dicke eines bezüglich seiner Länge und seiner Breite definierten Abschnitts einer solchen auf einen Liner aufgetragenen Klebemassenschicht bestimmt werden, abzüglich der (bekannten oder separat ermittelbaren) Dicke eines Abschnitts gleicher Dimensionen des verwendeten Liners. Die Dicke der Klebemasseschicht lässt sich über handelsübliche Dickenmessgeräte (Taster-Prüfgeräte) mit Genauigkeiten von weniger als 1 $\mu$m Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

Wie bereits die Dicke einer Klebemasseschicht lässt sich auch die Dicke eines Klebebands (Klebestreifens) bzw. eines Trägers analog über handelsübliche Dickenmessgeräte (Taster-Prüfgeräte) mit Genauigkeiten von weniger als 1 $\mu$m Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

*Verklebungsfestigkeit - Scherfestigkeit*

Als Kenngröße für die Qualität der erzielten Verklebung wird die Verklebungsfestigkeit des verklebten Verbunds für die zu untersuchenden Klebebänder ermittelt. Hierzu wird die Scherfestigkeit in einem dynamischen Zugscherversuch in Anlehnung an DIN-EN 1465 bei 23 °C und 50 % relativer Luftfeuchtigkeit für eine Prüfgeschwindigkeit von 10 mm/min jeweils quantitativ bestimmt (Ergebnisse in N/mm$^2$ = MPa). Als Prüfkörper kommen solche aus Stahl zum Einsatz, welche vor der Verklebung mit Aceton gereinigt wurden. Die Bereitstellung der Probekörper sowie der Schichtdicken der Klebebänder entsprechen den unten genannten Angaben.

Angegeben ist der Mittelwert aus drei Messungen.

Folgende erfindungsgemäße Beispiele für Klebebänder umfassend wenigstens eine Klebemasseschicht D wurden hergestellt, zwischen Substrate verklebt und im Anschluss durch ein Anlegen einer Spannung elektrisch wieder gelöst. Die Klebemassen der Schicht D waren dabei jeweils hitzeaktivierbare, vor der Aktivierung nicht haftklebrige Klebemassen.

Tabelle 1: Eingesetzte Chemikalien:

| Verwendete Bezeichnung / Handelsname | Anbieter | Spezifizierung | Funktion |
|---|---|---|---|
| Desmomelt® 530 | Covestro AG, Leverkusen, Deutschland | hydroxy-terminiertes, weitgehend lineares, thermoplastisches, stark kristallisierendes Polyurethan-Elastomer | Polymerkomponente |
| Dispercoll® U 53 | Covestro AG, Leverkusen, Deutschland | Wässrige, anionische Dispersion eines hochmolekularen Polyurethans | Polymerkomponente |
| Borchigel® 0625 | Borchers GmbH, Langenfeld, Deutschland | Nichtionogenes Verdickungsmittel auf Polyurethanbasis | Verdicker |
| Dicumylperoxid | Pergan GmbH, Bocholt, Deutschland | CAS 80-43-3 | Vernetzungschemikalie |
| Dispercoll® BL XP 2514 | Covestro AG, Leverkusen, Deutschland | Wässrige Suspension von TDI-Dimer | Vernetzungschemikalie |
| Dancure® 999 | Danquinsa GmbH | 2,4-dioxo-1,3-diazetidin-1,3-bis(4-methyl-m-phenylen)-diisocyanate | Vernetzer |
| Dynasylan® MEMO | Evonik Industries, Deutschland | 3-Methacryloxypropyltriethoxysilan CAS 21142-29-0 | SilanHaftvermittler |
| MEK | Shell | Methylethylketon; CAS 78-93-3 | Lösungsmittel |

**Transferklebebänder gemäß der Beispiele 1 bis 3**

**Erfindungsgemäßes Beispiel 1**

Die Klebemasseschicht D wurde folgendermaßen bereitgestellt:
87,0 Gew.-%, bezogen auf die spätere Gesamtmenge der Klebemasse ohne Lösungsmittel, Desmomelt® 530 (Polyurethan) wurden in MEK gelöst.
Anschließend wurden 10,0 Gew.-% Dancure® 999 hinzugegeben und intensiv mit dem gelösten Polyurethan vermischt.
Dann wurden 3,0 Gew. % der ionischen Flüssigkeit 1-Ethyl-3-methylimidazolium-bis(trifluormethylsulfonyl)imid (EMIM-TFSI) zugegeben und ebenfalls intensiv vermischt.
Die hitzeaktivierbare Klebemasse wurde anschließend aus Lösung auf ein Glassinetrennpapier ausgestrichen und bei 50 °C für 20 Minuten getrocknet. Nach der Trocknung betrug die Schichtdicke 30 µm.

**Erfindungsgemäßes Beispiel 2**

Die Klebemasseschicht D wurde folgendermaßen bereitgestellt:
100 Gewichtsteile der wässrigen PU-Dispersion Dispercoll U53 (Firma Covestro) wurde bereitgestellt. Es wurden 10 Gewichtsteile Dispercoll BL XP 2514 (Firma Covestro) und 1,5 Gewichtsteile Borchigel 0625 hinzugegeben und intensiv mit der PU-Dispersion vermischt. Anschließend wurden 3,0 Gewichtsteile der ionischen Flüssigkeit 1-Ethyl-3-methylimidazolium-bis(trifluormethylsulfonyl)imid (EMIM-TFSI) zugegeben und ebenfalls intensiv vermischt.
Die hitzeaktivierbare Klebemasse wurde anschließend aus der wässrigen, verdickten Lösung auf ein Glassinetrennpapier ausgestrichen und bei 50 °C für 20 Minuten getrocknet. Nach der Trocknung betrug die Schichtdicke 30 µm.

**Erfindungsgemäßes Beispiel 3**

Die Klebemasseschicht D wurde folgendermaßen bereitgestellt:

89,0 Gew.-%, bezogen auf die spätere Gesamtmenge der Klebemasse ohne Lösungsmittel, Desmomelt 530 (Polyurethan) wurden in MEK gelöst.

Es wurden 5 Gew.-% Dicumylperoxid und 3 Gew.-% 3-Methacryloxypropytriethoxysilan hinzugegeben und intensiv mit dem gelösten PU vermischt.

Anschließend wurden 3,0 Gew. % der ionischen Flüssigkeit 1-Ethyl-3-methylimidazolium-bis(trifluormethylsulfonyl)imid (EMIM-TFSI) zugegeben und ebenfalls intensiv vermischt.

Die hitzeaktivierbare Klebemasse wurde anschließend aus der wässrigen, verdickten Lösung auf ein Glassinetrennpapier ausgestrichen und bei 50 °C für 20 Minuten getrocknet. Nach der Trocknung betrug die Schichtdicke 30 μm.

Ferner wurde in Beispiel 4 ein erfindungsgemäßes Beispiel für einen Zweischichtverbund D-C hergestellt. Die Klebemassen D und C waren dabei jeweils hitzeaktivierbare, vor der Aktivierung nicht haftklebrige Klebemassen.

**Erfindungsgemäßes Beispiel 4**

Die Klebemasseschicht D wurde folgendermaßen bereitgestellt:

87,0 Gew.-%, bezogen auf die spätere Gesamtmenge der Klebemasse ohne Lösungsmittel, Desmomelt 530 (Polyurethan) wurden in MEK gelöst.

Anschließend wurden 10,0 Gew.-% Dancure® 999 hinzugegeben und intensiv mit dem gelösten Polyurethan vermischt.

Dann wurden 3,0 Gew. % der ionischen Flüssigkeit 1-Ethyl-3-methylimidazolium-bis(trifluormethylsulfonyl)imid (EMIM-TFSI) zugegeben und ebenfalls intensiv vermischt.

Die hitzeaktivierbare Klebemasse wurde anschließend aus Lösung auf ein Glassinetrennpapier ausgestrichen und bei 50 °C für 20 Minuten getrocknet. Nach der Trocknung betrug die Schichtdicke 30 μm.

Die Klebemasseschicht C wurde folgendermaßen als elektrisch leitfähige Klebemasseschicht bereitgestellt:

36,0 Gew.-%, bezogen auf die spätere Gesamtmenge der Klebemasse ohne Lösungsmittel, Desmomelt 530 (Polyurethan) wurden in MEK gelöst.

Anschließend wurden 4,0 Gew.-% Dancure® 999 hinzugegeben und intensiv mit dem gelösten Polyurethan vermischt.

Dann wurden 60 Gew. % an Nickelpartikeln (durchschnittliche Partikelgröße 4 μm: T 123, Fa. Vale Canada Ltd) zugegeben und ebenfalls intensiv vermischt.

Die hitzeaktivierbare Klebemasse wurde anschließend aus Lösung auf einen separaten Glassinetrennpapier ausgestrichen und bei 50 °C für 20 Minuten getrocknet. Nach der Trocknung betrug die Schichtdicke 30 μm.

Die beiden Schichten D und C wurden mit einer Gummirolle luftblasenfrei aufeinandergelegt und bei 70 °C mit einer Geschwindigkeit von 1m/min durch einen Heißlaminator gefahren.

Zum Test der Verklebungsfestigkeit wurde das jeweilige Klebeband (Transfer-Klebebänder gemäß der Beispiele 1 bis 3 sowie Klebeband mit Zweischichtaufbau gemäß Beispiel 4) folgendermaßen zwischen zwei Stahlplatten verklebt: Aus dem zu prüfenden Klebeband (einseitig abgedeckt mit Trennpapier) wurden 3 ca.15 x 25 mm² große Stücke ausgeschnitten.

Ein Prüfkörper aus Stahl (Substrat) wird auf eine auf 70 °C vorgewärmte Heizplatte gelegt. Nach ca. 5 Sekunden der Temperierung wurde die offene, nicht mit Trennpapier abgedeckte Seite der Klebebandprobe mit Hilfe einer Pinzette auf eine Oberfläche des Prüfkörpers aufgebracht und mit einer Gummirolle glatt angedrückt.

Beispiele 1 bis 3:

Nach dem Abkühlen wurden die überstehenden Klebebandränder abgeschnitten und das Trennpapier entfernt. Ein zweiter Prüfkörper wurde für 5 s auf eine auf 70 °C vorgewärmte Heizplatte gelegt und temperiert. Auf diesen wurde der beschichtete Streifen (Klebeband auf erstem Substrat aus Stahl) mit genau 10 mm Überlappung aufgebracht und angedrückt. Anschließend wurde der so vor-laminierte Verbund abkühlen gelassen.

Beispiel 4:

Nach dem Abkühlen wurden die überstehenden Klebebandränder abgeschnitten, wobei aber zu einer Seite ein 2 cm langer Klebebandstreifen belassen wurde, und das Trennpapier entfernt. Ein zweiter Prüfkörper wurde für 5 s auf eine auf 70 °C vorgewärmte Heizplatte gelegt und temperiert. Auf diesen wurde der beschichtete Streifen (Klebeband auf erstem Substrat aus Stahl) mit genau 10 mm Überlappung aufgebracht und angedrückt. Anschließend wurde der so vor-laminierte Verbund abkühlen gelassen.

Anschließend erfolgte jeweils eine Aktivierung durch Wärmezufuhr und Druck in einer Heizpresse.

Im erfindungsgemäßen Beispiel 1 wurde für 5 Minuten auf eine Temperatur von 100 °C bei einem Druck von 10 bar erhitzt.

Im erfindungsgemäßen Beispiel 2 wurde für 2 Minuten auf eine Temperatur von 90 °C bei einem Druck von 5 bar erhitzt.

Im erfindungsgemäßen Beispiel 3 wurde für 5 Minuten auf eine Temperatur von 150 °C bei einem Druck von 5 bar erhitzt.

Im erfindungsgemäßen Beispiel 4 wurde für 5 Minuten auf eine Temperatur von 100 °C bei einem Druck von 10 bar erhitzt.

Die erhaltenen Probekörper wurden für 24 Stunden bei RT und 50 % r.F. (Standardklima) gelagert.

Die Verklebungsfestigkeiten wurden gemäß der oben angegebenen Methode bestimmt. Die Ergebnisse sind in Tabelle 2 zusammengefasst.

Anschließend wurden erneut Proben der oben genannten Beispiele 1 bis 4 hergestellt und auf die elektrische Wiederablösbarkeit geprüft.

Nach der Verklebung und Aktivierung wurde hierzu im Fall der Beispiele 1 bis 3 jeweils Spannung an die beiden Stahlplatten als Vertreter für leitfähige Substrate A und B angelegt und bei Beispiel 4 an die Stahlplatte, die an die Schicht D gebunden war, sowie an die elektrisch leitfähige Schicht C, und zwar über den 2 cm breiten seitlichen Streifen des Klebebandes.

Die Spannung betrug bei den Beispielen 1 bis 3 48 V und wurde für 5 min angelegt und bei Beispiel 4 12 V, welche für 3 Minuten angelegt wurde.

Die Verklebungsfestigkeiten wurden gemäß der oben angegebenen Methode bestimmt. Die Ergebnisse sind ebenfalls in Tabelle 2 zusammengefasst.

Tabelle 2

| Beispiel | Scherfestigkeit [MPa] vor Anlegen der Spannung | Scherfestigkeit [MPa] nach Anlegen der Spannung |
|---|---|---|
| 1 | 6 | 0,6 |
| 2 | 6,5 | 0,5 |
| 3 | 7 | 0,7 |
| 4 | 4,9 | 0,1 |

Wie die Versuche zur Verklebungsfestigkeit und Wiederablösbarkeit bei den erfindungsgemäßen Beispielen 1, 2, 3 und 4 zeigen, ist die Verklebungsfestigkeit der Klebemasseschicht D an Substrate, wie Stahl, vor dem Anlegen der Spannung groß und wird erst durch das Anlegen der Spannung auf einen so geringen Wert reduziert, sodass sich die Substrate schnell und ohne großen Kraftaufwand und rückstandsfrei in Bezug auf die Klebemasse der Schicht D voneinander lösen lassen.

Wie an den Werten in Tabelle 2 erkennbar ist, konnte die Verklebungsfestigkeit durch Anlegen der Spannung dabei deutlich reduziert werden.

Somit ist es überraschenderweise gelungen reaktive hitzeaktivierbare Klebebänder bzw. verklebte Verbunde umfassend hitzeaktivierte Klebebänder elektrisch ablösbar bereitzustellen.

Bezugszeichenliste

1 Klebemasseschicht D
2 elektrisch leitfähige Trägerschicht T
2a freie Fläche der elektrisch leitfähigen Trägerschicht T
3 zweite Klebemasseschicht C
3a freie Fläche der Klebemasseschicht C
4 erstes Substrat A
5 zweites Substrat B
6 zweite elektrisch leitfähige Trägerschicht T'
6a freie Fläche der elektrisch leitfähigen Trägerschicht T'
7 dritte Klebemasseschicht C'

**Patentansprüche**

1. Klebeband, umfassend wenigstens eine Klebemasseschicht D, wobei die Klebemasse der Klebemasseschicht D eine hitzeaktivierbare Klebemasse ist und wenigstens ein Elektrolyt enthält.

2. Klebeband nach Anspruch 1, **dadurch gekennzeichnet, dass** der Elektrolyt der Klebemasseschicht D ausgewählt ist aus der Gruppe bestehend aus ionischen Flüssigkeiten und Metallsalzen, wobei ionische Flüssigkeiten besonders bevorzugt sind.

3. Klebeband nach Anspruch 2, **dadurch gekennzeichnet, dass** das Anion der ionischen Flüssigkeit ausgewählt ist aus der Gruppe bestehend aus
$Br^-$, $AlCl_4^-$, $Al_2Cl_7^-$, $NO_3^-$, $BF_4^-$, $PF_6^-$, $CH_3COO^-$, $CF_3COO^-$, $CF_3CO_3^-$, $CF_3SO_3^-$, $(CF_3SO_2)_2N^-$, $(CF_3SO_2)_3C^-$, $AsF_6^-$, $SbF_6^-$, $CF_3(CF_2)_3SO_3^-$, $(CF_3CF_2SO_2)_2N^-$, $CF_3CF_2CF_2COO^-$, $(FSO_2)_2N^-$, und dabei besonders bevorzugt ausgewählt ist aus $(CF_3SO_2)_2N^-$ und $(FSO_2)_2N^-$ und/oder das Kation der ionischen Flüssigkeit ausgewählt ist aus der Gruppe bestehend aus Kationen auf Imidazolium-Basis, Kationen auf Pyridinium-Basis, Kationen auf Pyrrolidin-Basis und Kationen auf Ammonium-Basis, und dabei besonders bevorzugt ausgewählt ist aus der Gruppe bestehend aus Kationen auf Imidazolium-Basis, wobei das Kation besonders bevorzugt ausgewählt ist aus der Gruppe bestehend aus 1-Ethyl-3-methylimidazolium und 1-Butyl-3-methylimidazolium, wobei das Kation ganz besonders bevorzugt 1-Ethyl-3-methylimidazolium ist.

4. Klebeband nach einem der vorherigen Ansprüche, **dadurch gekennzeichnet, dass** der Elektrolyt der Klebemasseschicht D ausgewählt ist aus der Gruppe bestehend aus den ionischen Flüssigkeiten 1-Ethyl-3-methylimidazolium-bis(trifluormethylsulfonyl)imid (EMIM-TFSI) und 1-Ethyl-3-methylimidazolium bis(fluorsulfonyl)imid (EMIM-FSI).

5. Klebeband nach einem der vorhergehenden Ansprüche, **dadurch gekennzeichnet, dass** die erste Klebemasseschicht D 1 bis 10 Gew.-%, bevorzugt 2 bis 8 Gew.-%, an Elektrolyten, bevorzugt ionischen Flüssigkeiten, bezogen auf die Gesamtmenge der Klebemasse enthält.

6. Klebeband nach einem der vorhergehenden Ansprüche, **dadurch gekennzeichnet, dass** die hitzeaktivierbare Klebemasse der Klebemasseschicht D eine reaktive hitzeaktivierbare Klebemasse oder eine physikalisch hitzeaktivierbare Klebemasse ist, wobei sie besonders bevorzugt eine reaktive hitzeaktivierbare Klebemasse ist.

7. Klebeband nach einem der vorherigen Ansprüche, **dadurch gekennzeichnet, dass** die hitzeaktivierbare Klebemasse der Klebemasseschicht D eine Polymerkomponente umfasst, die gebildet ist aus mindestens einem thermoplastischen Elastomer, bevorzugt thermoplastischem Polyurethan.

8. Klebeband nach Anspruch 7, **dadurch gekennzeichnet, dass** die hitzeaktivierbare Klebemasse der Klebemasseschicht D eine reaktive hitzeaktivierbare Klebemasse ist und die Polymerkomponente, aus mindestens einem Polymer, das funktionelle Gruppen enthält, die mit Isocyanat reagieren können, gebildet ist, und die reaktive hitzeaktivierbare Klebemasse der Klebemasseschicht D weiterhin eine Vernetzer-Komponente, gebildet aus mindestens einer Isocyanat-haltigen Verbindung umfasst, wobei die reaktive hitzeaktivierbare Klebemasse der Klebemasseschicht D bevorzugt weiterhin mindestens eine weitere Komponente aus der Gruppe der Epoxide und/oder Epoxy-Verbindungen umfasst.

9. Klebeband nach Anspruch 7, **dadurch gekennzeichnet, dass** die hitzeaktivierbare Klebemasse der Klebemasseschicht D eine reaktive hitzeaktivierbare Klebemasse ist und die reaktive hitzeaktivierbare Klebemasse der Klebemasseschicht D weiterhin mindestens ein Peroxid umfasst, wobei das Peroxid bevorzugt Dicumylperoxid ist.

10. Klebeband nach einem der Ansprüche 1 bis 9, **dadurch gekennzeichnet, dass** das Klebeband ein Transferklebband ist und aus der Klebemasseschicht D besteht.

11. Klebeband nach einem der Ansprüche 1 bis 9, **dadurch gekennzeichnet, dass** es zusätzlich wenigstens eine zweite Klebemasseschicht C umfasst, wobei die zweite Klebemasseschicht bevorzugt elektrisch leitfähig ist.

12. Klebeband nach einem der Ansprüche 1 bis 9, **dadurch gekennzeichnet, dass** es zusätzlich wenigstens die folgenden Schichten umfasst:

  • Eine zweite Klebemasseschicht C; und

• wenigstens eine elektrisch leitfähige Trägerschicht T, die zwischen den Schichten D und C angeordnet ist.

13. Klebeband nach einem der Ansprüche 1 bis 9, **dadurch gekennzeichnet, dass** es zusätzlich wenigstens die folgenden Schichten umfasst:

   • Eine zweite Klebemasseschicht C; und
   • wenigstens eine erste elektrisch leitfähige Trägerschicht T, die zwischen den Schichten D und C angeordnet ist; und
   • wenigstens eine zweite elektrisch leitfähige Trägerschicht T', die auf der der ersten elektrisch leitfähigen Trägerschicht T gegenüberliegenden Fläche der Klebemasseschicht D angeordnet ist; und
   • Eine dritte Klebemasseschicht C', die auf der der ersten Klebemasseschicht D gegenüberliegenden Fläche der zweiten Trägerschicht T' angeordnet ist.

14. Verklebter Verbund umfassend wenigstens folgende Schichten:

   • Ein erstes Substrat A; und
   • Ein zweites Substrat B; und
   • Ein Klebeband nach einem der Ansprüche 1 bis 13, welches zwischen dem Substrat A und dem Substrat B angeordnet ist und die Substrate A und B miteinander verklebt.

15. Verfahren zum elektrischen Lösen des Verbundes nach Anspruch 14, umfassend wenigstens folgende Verfahrensschritte:

   i.) Anlegen einer Spannung an zwei verschiedenen Stellen des Verbundes, wobei die Spannung bevorzugt von 2 bis 50 V beträgt.

16. Verwendung des Klebebands gemäß einem der Ansprüche 1 bis 13 zur Verklebung von Bauteilen in elektronischen Geräten, Automobilen, medizinischen Geräten und zahnmedizinischen Geräten.

Fig. 1

← 1

← 2

← 3

Fig. 2

← 1

← 2

← 3

2a

Fig. 3

2a

← 1

← 2

← 3

EP 4 506 431 A1

Fig. 4

2a

4
1
2
3
5

Fig. 5

2a

-
+

4
1
2
3
5

25

Fig. 6

Fig. 7

Fig. 8

2a

4

3

2

1

6a

6

7

5

Fig. 9

1

3

Fig. 10

← 4

← 1

← 3

← 5

3a

Fig. 11

← 4

← 1

← 3

← 5

Europäisches
Patentamt

European
Patent Office

Office européen
des brevets

**EUROPÄISCHER RECHERCHENBERICHT**

Nummer der Anmeldung

**EP 23 19 1080**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2022/411673 A1 (STAPF STEFANIE [DE] ET AL) 29. Dezember 2022 (2022-12-29) * Absätze [0001], [0021], [0219], [0244] – [0247]; Ansprüche 1, 16-18; Beispiel 2; Tabelle 4 * ----- | 1-3,6, 10,14,15 | INV. C09J5/00 C09J7/22 C09J7/28 C09J7/35 C09J9/02 |
| X | CN 114 644 898 A (DAMAI SCIENCE AND TECH CO LTD) 21. Juni 2022 (2022-06-21) * Anspruch 1; Beispiele; Tabelle 2 * ----- | 1-6,14, 16 | |
| X | US 2021/277286 A1 (MIZOBATA KAORI [JP] ET AL) 9. September 2021 (2021-09-09) * Absätze [0002], [0122], [0176], [0189], [0206], [0224], [0240]; Ansprüche 1, 11, 12; Beispiele; Tabelle 1 * ----- | 1-9, 11-15 | |
| X | US 2017/355892 A1 (HEUCHER REIMAR [DE] ET AL) 14. Dezember 2017 (2017-12-14) * Absatz [0057]; Ansprüche * ----- | 14,15 | |

RECHERCHIERTE
SACHGEBIETE (IPC)

C09J

Der vorliegende Recherchenbericht wurde für alle Patentansprüche erstellt

| Recherchenort | Abschlußdatum der Recherche | Prüfer |
|---|---|---|
| München | 9. Januar 2024 | Kahl, Philipp |

EPO FORM 1503 03.82 (P04C03)

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes
    Dokument

## ANHANG ZUM EUROPÄISCHEN RECHERCHENBERICHT
## ÜBER DIE EUROPÄISCHE PATENTANMELDUNG NR.

EP 23 19 1080

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-01-2024

| Im Recherchenbericht angeführtes Patentdokument | Datum der Veröffentlichung | Mitglied(er) der Patentfamilie | | Datum der Veröffentlichung |
|---|---|---|---|---|
| US 2022411673 A1 | 29-12-2022 | CN | 114787310 A | 22-07-2022 |
| | | EP | 3835383 A1 | 16-06-2021 |
| | | ES | 2948014 T3 | 25-08-2023 |
| | | JP | 2023506806 A | 20-02-2023 |
| | | KR | 20220117891 A | 24-08-2022 |
| | | PL | 3835383 T3 | 11-09-2023 |
| | | TW | 202132523 A | 01-09-2021 |
| | | US | 2022411673 A1 | 29-12-2022 |
| | | WO | 2021115771 A1 | 17-06-2021 |
| CN 114644898 A | 21-06-2022 | KEINE | | |
| US 2021277286 A1 | 09-09-2021 | CN | 112639045 A | 09-04-2021 |
| | | EP | 3848434 A1 | 14-07-2021 |
| | | JP | 2020164778 A | 08-10-2020 |
| | | KR | 20210053896 A | 12-05-2021 |
| | | US | 2021277286 A1 | 09-09-2021 |
| US 2017355892 A1 | 14-12-2017 | CN | 107207938 A | 26-09-2017 |
| | | EP | 3262132 A1 | 03-01-2018 |
| | | JP | 6770523 B2 | 14-10-2020 |
| | | JP | 2018513225 A | 24-05-2018 |
| | | KR | 20170122218 A | 03-11-2017 |
| | | TW | 201641652 A | 01-12-2016 |
| | | US | 2017355892 A1 | 14-12-2017 |
| | | WO | 2016135341 A1 | 01-09-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102021200580 A1
- EP 3031875 B1
- EP 3199344 B1
- DE 102005050632 A1
- EP 4067401 A1
- EP 4050040 A1
- US 2007269659 A1

**In der Beschreibung aufgeführte Nicht-Patentliteratur**

- *CHEMICAL ABSTRACTS*, 80-43-3
- *CHEMICAL ABSTRACTS*, 21142-29-0
- *CHEMICAL ABSTRACTS*, 78-93-3